# EUROPEAN PATENT SPECIFICATION

(11) **EP 1 184 278 B1**
(45) Date of publication and mention of the grant of the patent: **24.01.2007**
(21) Application number: 01120878.2
(22) Date of filing: 30.08.2001
(51) Int. Cl.: B62M 23/02

(54) **Motor-assisted bicycle**
Fahrrad mit Hilfsantrieb
Bicyclette à assistance motorisée

(30) Priority: 31.08.2000 JP 2000263902; 13.11.2000 JP 2000345741; 18.10.2000 JP 2000317804; 14.12.2000 JP 2000379922; 17.11.2000 JP 2000350824; 03.04.2001 JP 2001104323
(43) Date of publication of application: 06.03.2002
(73) Proprietor: HONDA GIKEN KOGYO KABUSHIKI KAISHA, Minato-ku, Tokyo (JP)
(72) Inventor: Nakagomi, Yoshio, c/o K.K. Honda Gijutsu Kenkyusho, Wako-shi, Saitama (JP); Maruyama, Tomoyuki, K.K. Honda Gijutsu Kenkyusho, Wako-shi, Saitama (JP); Nagura, Hidenori, K.K. Honda Gijutsu Kenkyusho, Wako-shi, Saitama (JP); Shimmura, Hiroyuki, K.K. Honda Gijutsu Kenkyusho, Wako-shi, Saitama (JP); Fukunaga, Makoto, K.K. Honda Gijutsu Kenkyusho, Wako-shi, Saitama (JP); Iseno, Mitsuru, K.K. Honda Gijutsu Kenkyusho, Wako-shi, Saitama (JP); Fukuma, Go, c/o K.K. Honda Gijutsu Kenkyusho, Wako-shi, Saitama (JP); Kashima, Hajime, c/o K.K. Honda Gijutsu Kenkyusho, Wako-shi, Saitama (JP)
(74) Representative: Liska, Horst

(56) References cited:
- EP-A- 0 905 013
- EP-A- 0 935 128
- DE-A- 2 218 730
- US-A- 4 410 060
- US-A- 5 934 401
- PATENT ABSTRACTS OF JAPAN vol. 1998, no. 12, 31 October 1998 (1998-10-31) & JP 10 181651 A (YAMAHA MOTOR CO LTD), 7 July 1998 (1998-07-07)
- PATENT ABSTRACTS OF JAPAN vol. 1998, no. 10, 31 August 1998 (1998-08-31) & JP 10 138981 A (YAMAHA MOTOR CO LTD), 26 May 1998 (1998-05-26)
- PATENT ABSTRACTS OF JAPAN vol. 1997, no. 09, 30 September 1997 (1997-09-30) & JP 09 126917 A (YAMAHA MOTOR CO LTD), 16 May 1997 (1997-05-16)
- PATENT ABSTRACTS OF JAPAN vol. 1998, no. 11, 30 September 1998 (1998-09-30) & JP 10 152089 A (YAMAHA MOTOR CO LTD), 9 June 1998 (1998-06-09)
- PATENT ABSTRACTS OF JAPAN vol. 2000, no. 05, 14 September 2000 (2000-09-14) & JP 2000 033893 A (MIYATA IND CO LTD), 2 February 2000 (2000-02-02)
- PATENT ABSTRACTS OF JAPAN vol. 1998, no. 03, 27 February 1998 (1998-02-27) & JP 09 301262 A (DAIDO STEEL CO LTD; NISSAN MOTOR CO LTD), 25 November 1997 (1997-11-25)
- PATENT ABSTRACTS OF JAPAN vol. 2000, no. 07, 29 September 2000 (2000-09-29) & JP 2000 108980 A (SANYO ELECTRIC CO LTD), 18 April 2000 (2000-04-18)

## Description

### DETAILED DESCRIPTION OF THE INVENTION

### Technical Field to Which the Invention Pertains

This invention relates to a foldable motor-assisted bicycle, and more particularly to a foldable motor-assisted bicycle which is simplified in structure of a body frame and can assure a great extent of adjustment of the height of a seat and includes locking means for theft prevention.

A foldable motor-assisted bicycle according to the preamble of claim 1 is known from EP 0 905 014.

A further motor-assisted bicycle is known which includes a manually operated driving system for transmitting treadling force applied to a pedal to a rear wheel and a motor driving system capable of adding assisting power to the manually operated driving system in response to the treading force. For example, the official gazette of Japanese Patent Laid-Open No. Hei 6-239286 discloses a motor-assisted bicycle wherein a down tube (front side body frame) extending downwardly rearwards from a head pipe is formed in a box-like shape. In this motor-assisted bicycle, a battery and a power assisting system which uses the battery as a power supply are accommodated in the box-shaped front side body frame.

A motor-assisted bicycle is known which includes a manually operated driving system for transmitting treadling force applied to a pedal to a rear wheel and a motor driving system capable of adding assisting power to the manually operated driving system in response to the treading force. Locking means which can prevent theft of such a motor-assisted bicycle as just described has been proposed. For example, locking means disclosed in the official gazette of Japanese Patent Laid-Open No. Hei 9-142349 is configured such that a theft preventing wire extending through a main frame of a vehicle body and a seat post is provided for being extracted from the main frame and the extracted end thereof is wound around an immobile object such as a stake to place the vehicle body into an immobile state. The theft preventing wire can be accommodated, when it is not used, into the main frame and the seat post.

In some of conventional motor-assisted bicycles, a seat tube is inserted in a seat post such that the height of the seat can be adjusted by moving the seat tube back and forth in the seat tube. As an example of bicycle of the type mentioned, a bicycle wherein a seat post is bent in order to facilitate stepping across of the driver or such a bicycle as disclosed, for example, in the official gazette of Japanese Patent Laid-Open No. Hei 11-105758 is known.

In the latter motor-assisted bicycle, the seat post for holding the seat tube is disposed above an assist unit (motor unit). Therefore, the motor-assisted bicycle is configured such that, if the seat post is extend downwardly in its lengthwise direction, then the extension line interferes with the assist unit.

A motor-assisted bicycle is known which includes a manually operated driving system for transmitting treadling force applied to a pedal to a rear wheel and a motor driving system capable of adding assisting power to the manually operated driving system in response to the treading force. For example, the official gazette of Japanese Patent Laid-open No. Hei 11-105758 discloses a motor-assisted bicycle wherein a frame is configured so as to be folded up and a battery can be loaded into and unloaded through a fold up opening of the frame.

### Problems to Be Solved by the Invention

Generally, a down tube of a bicycle is formed from a pipe of a simple contour and generally considered to have a simple appearance, and also in practical use, the function of it can be achieved sufficiently only with a single pipe. In contrast, the down tube disclosed in the official gazette mentioned above is complicated in structure in that it is generally formed in a box-like shape in order to accommodate a power assisting system and so forth.

Further, the locking means described above is limited to a structure wherein hollow portions of the main frame and the seat post communicate with each other because, when it is not used, the theft preventing wire is retracted into the hollow portions of the main frame and the seat post. Accordingly, the structure is complicated, and besides, the degree of freedom in designing is low with regard to the structure of the body frame.

Furthermore, the conventional motor-assisted bicycle described above has a subject in that a long seat tube cannot be used and a great range of adjustment of the height of the seat cannot be assured. Particularly where the bicycle uses tires of a small diameter (less then 20 inches), it is demanded to assure a great range of upward and downward movement of the seat so that not only a grown-up person but also a child can ride the bicycle.

In the motor-assisted bicycle described above, where a rear brake is provided at forwardly upwardly of a rear tire (rear wheel), a brake wire extends from a brake lever provided on a handle bar at a front portion of the vehicle body to the rear brake. Accordingly, the brake wire is laid out along a frame portion in which a battery is accommodated. Where a brake wire is laid out along a body frame in this manner, the following attentions must be paid.

In particular, in order to facilitate loading and unloading of a battery in a motor-assisted bicycle wherein the battery is carried immediately prior to the rear wheel, a structure wherein the battery is loaded into the vehicle body from above is sometimes used. In a structure of the type just described, a rear brake cable must be disposed so as not to disturb loading or unloading of the battery. Further, where the battery loaded is covered with a lid, it must be contrived to prevent the rear brake wire from disturbing opening or closing of the lid.

The present invention has been made in such a situation as described above, and it is an object of the present invention to provide a foldable motor-assisted bicycle which allows easy attachment and detachment of a battery.

This object is achieved by a foldable motor-assisted bicycle having the features of claim 1. According to the present invention, a motor-assisted bicycle, which includes a manually operated driving system for transmitting treadling force applied to a pedal and a motor driving system for adding assisting power to the manually operated driving system in response to the treadling force, comprises a body frame including a front frame and a rear frame, a seat post supported on the rear frame, and an assist unit including the manually operated driving system and the motor driving system, wherein the rear frame is formed from a left frame part and a right frame part, and the assist unit is suspended on the rear frame at a portion rearwardly of the proximity of the seat post.

Preferably, the left frame part and the right frame part are coupled to each other at a rather forward location of the vehicle body, and a supporting portion for the seat post is formed at the coupling location of the left frame part and the right frame part. According to these features, since the assist unit is disposed intensively rearwardly of the seat post, the structure of the frame and associated elements is simplified. Preferably, the left frame part and the right frame part are formed by die-cast of aluminum. According to this feature, reduction of the weight of the vehicle body can be anticipated, and a boss or the like for suspending the assist unit can be formed readily.

Preferably, a carrying section for a battery is provided rearwardly of the seat post between the left frame part and the right frame part. According to this feature, the space between the left and right frame parts can be utilized effectively.

Preferably, the rear frame is formed with an increased width at a portion thereof immediately rearwardly of the seat post as viewed in a side elevation. According to this feature, since the side faces of the battery can be covered with the increased width portion of the rear frame, the battery can be protected sufficiently and a good appearance can be obtained.

Preferably, the motor-assisted bicycle comprises rear portion fastening means for fastening the left frame part and the right frame part to each other rearwardly of the position at which the assist unit is suspended but forwardly of a rear wheel, and the rear portion fastening means serves also as means for fastening the assist unit to the rear frame. According to this feature, the assembly means of the assist unit to the rear frame and the fastening means for fastening the left frame part and the right frame part to each other can serve as each other.

Preferably, the motor-assisted bicycle comprises a chain extending between a driving sprocket wheel provided on an output power shaft of the assist unit and a driven sprocket wheel on a rear wheel side, and the chain overlaps, at a portion thereof in a substantially entire area in a lengthwise direction of the tension side thereof, with the right frame part as viewed in side elevation. According to this feature, the tension side of the chain is covered over a substantially entire area thereof with the right frame part.

Preferably, the motor-assisted bicycle comprises front portion fastening means provided downwardly of the coupling location for fastening the left frame part and the right frame part to each other, and the front portion fastening means has a boss portion for cooperating with the supporting portion for the seat post to contact with the seat post to support the seat post at two points. According to this feature, the seat post is supported at two points thereof by the supporting portion at the upper portion of the rear frame and the front portion fastening means.

Preferably, the motor-assisted bicycle includes a seat post supporting element formed on a body frame, and a seat post removably supported on the seat post supporting element with a stroke of upward and downward movement thereof set such that at least a lower portion of the seat post projects downwardly from the body frame, wherein the seat post has an engaging portion provided at a lower portion thereof for engaging with locking means of the motor-assisted bicycle.

Preferably, the engaging portion is a through-hole perforated in the seat post, and the locking means includes a wire for being extended, upon locking, to and around a front wheel through the through-hole and a connection element for coupling the opposite ends of the wire to each other.

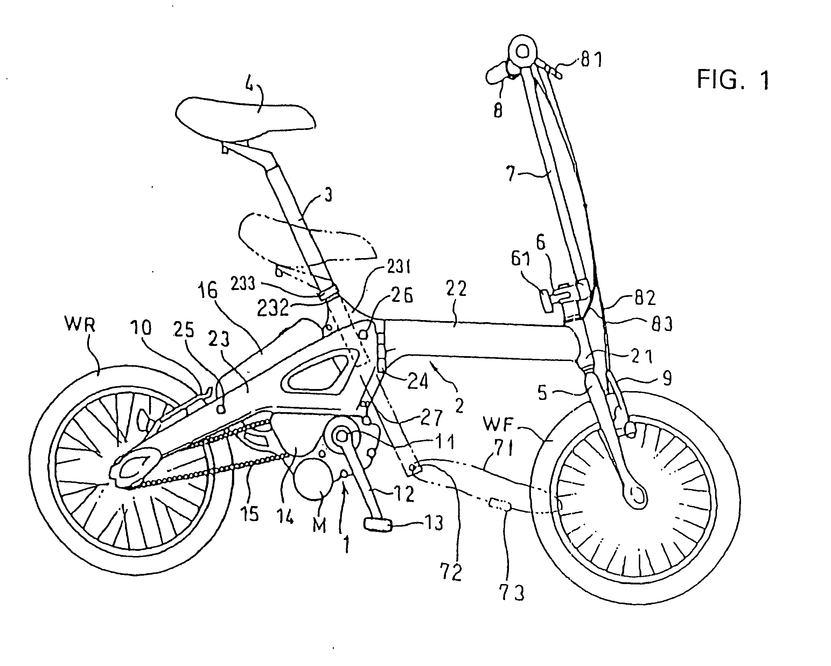

According to the features described above, since the locking means is engaged with the lower portion of the seat post, the vehicle body can be locked together with the seat post removably supported on the seat post supporting means. Accordingly, prevention of such a mischievous action as to take away only the seat post can be anticipated together with theft prevention of the vehicle body by locking of the vehicle body. Further, the lower portion of the seat post which projects downwardly is positioned near to the front wheel, and therefore, it is easy to extend the wire between them and a locking operation is facilitated. Further, in an embodiment wherein the frame is split.into front and rear parts, the front wheel of the front frame side and the seat post on the rear frame side are connected to each other, and therefore, even when the frame is disassembled, they are locked effectively. If they are locked by the wire free from a slack with the seat positioned at its lowermost position as indicated by a broken line in FIG. 1, then the seat is positioned within the range of opening and closing movement of a lid 162 and the wire is prevented from moving upwardly by the wire. Consequently, even if the user forgets to lock the lid, the seat prevents removal of the battery, and this makes locking of the battery more advantageous.

Preferably, in the motor-assisted bicycle wherein a seat tube can be moved back and forth in a seat post to adjust the height of the seat tube, the seat post has an open end through which the seat tube can project downwardly, a power-assisting unit supported on a body frame is positioned rearwardly of a downward axial line of the seat post, and the seat tube is not interfered with the power-assisting unit when the seat tube projects downwardly by a maximum amount. According to this feature, the margin of adjustment of the seat tube in the vertical direction can be increased.

Preferably, the seat tube has a stopper portion which is engaged with the seat post when the seat tube projects upwardly by a maximum amount. According to this feature, the force of the seat tube acting upon the body frame upon riding can be limited to assure the strength of the body frame and reduce the weight of the body frame.

Preferably, the motor-assisted bicycle which includes a manually operated driving system for transmitting treadling force applied to a pedal and a motor driving system for adding assisting power to the manually operated driving system in response to the treadling force, comprises a battery carrying section set between a seat post and a rear wheel for removably receiving a battery from above, a rear wheel brake positioned forwardly of the rear wheel, and a brake wire for operating the rear wheel brake, wherein the brake wire extends rearwardly from an operation section provided on a handle bar along a body frame, passes below the battery carrying section and is connected to the rear brake. According to this feature, the layout wherein the brake wire passes below the battery carrying section so that it does not make an obstacle to loading or unloading of a battery is set.

Preferably, the rear wheel brake is mounted on a rear frame of a body frame, and the brake wire extends rearwardly of a vehicle body once from the rear wheel brake and then is bent downwardly, whereafter the brake wire extends forwardly passing below the battery carrying section. According to this feature, the brake wire is laid out bypassing the proximity of a location above the battery carrying section immediately forwardly of the rear wheel brake so that it does not make an obstacle to loading or unloading of a battery.

Preferably, the battery carrying section is disposed between a left frame part and a right frame part having increased widths in vertical directions, and the brake wire extends forwardly along the inner side of the increased width frame of either one of the left frame part and the right frame part. According to this feature, since the brake wire is laid out behind the right or left frame part, a good appearance can be anticipated.

Preferably, the motor-assisted bicycle comprises a speed change gear provided on a shaft on which the rear wheel is supported, and a speed change gear wire for operating the speed change gear, wherein the speed change gear wire extends rearwardly from the operation section provided on the handle bar along the body frame, passes below the battery and is connected to the rear wheel brake passing below the battery. According to this feature, the layout wherein the speed change gear wire passes below the battery carrying section so that it does not make an obstacle to loading or unloading of a battery is set.

Preferably, the speed change gear wire extends forwardly along the inner side of the increased width frame of the front portion of the other of the left frame part and the right frame part. According to this feature, since the speed change gear wire is laid out behind the right or left frame part, a good appearance can be anticipated.

Preferably, the motor-assisted bicycle comprises a fastening member for coupling the brake wire and the speed change gear wire to the increased width frames on the inner side. According to this feature, since the brake wire and the speed change gear wire are secured to the body frame on the inner side, a good appearance is anticipated.

Preferably, the operation section provided on the handle bar is an assembly wherein operation mechanisms for the rear brake and the speed change gear are incorporated integrally. According to this feature, the two wires extending rearwardly from one location are laid out so as not to be complicated.

### BRIEF DESCRIPTION OF THE DRAWINGS

In the following, an embodiment of the present invention is described with reference to the drawings, in which:
FIG. 1 is a side elevational view of a motor-assisted bicycle according to an embodiment of the present invention.
FIG. 2 is a perspective view of a rear frame as viewed from leftwardly forwardly of the vehicle body.
FIG. 3 is a plan view of the rear frame.
FIG. 4 is a partial side elevational view of an assist unit and associated elements.
FIG. 5 is a sectional view taken along line A-A of FIG. 4.
FIG. 6 is a sectional plan view of an end block provided on a front frame.
FIG. 7 is a front elevational view of the end block provided on the front frame.
FIG. 8 is a sectional plan view of a modification to the end block.
FIG. 9 is a front elevational view of the modification to the end block.
FIG. 10 is a plan view of a tray on which a motor-assisted bicycle is accommodated.
FIG. 11 is a perspective view of the tray on which the motor-assisted bicycle is accommodated.
FIG. 12 is a perspective view of a rear portion of a four-wheel automobile on which the tray is provided.
FIG. 13 is a sectional view of the rear portion of the four-wheel automobile on which the tray is provided.
FIG. 14 is a sectional view taken along line B-B of FIG. 4.
FIG. 15 is a sectional perspective view showing a structure of a battery.
FIG. 16 is a perspective view of a battery box.
FIG. 17 is a side elevational sectional view of the battery box.
FIG. 18 is a sectional plan view of a joint of a handle post.
FIG. 19 is a partial perspective view of the joint of the handle post.
FIG. 20 is a perspective view of the joint of the handle post.
FIG. 21 is a partial sectional plan view of a pedal.
FIG. 22 is a plan view of a clamper of a seat post.
FIG. 23 is a front elevational view of the clamper of the seat post.
FIG. 24 is a side elevational view of a seat tube.

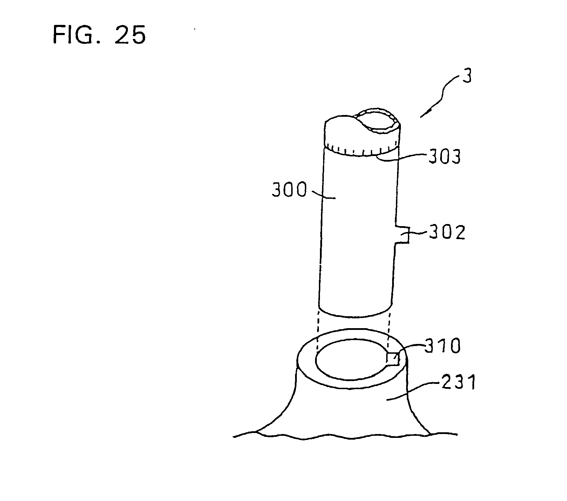

FIG. 25 is a perspective view illustrating an engaging relationship between the seat tube and a seat post.
FIG. 26 is a partial perspective view of the motor-assisted bicycle as viewed from the right rear.
FIG. 27 is a partial perspective view of the motor-assisted bicycle as viewed from the right rear.
FIG. 28 is a partial perspective view of the motor-assisted bicycle as viewed from the right lower rear.
FIG. 29 is a perspective view of a left handle bar portion.
FIG. 30 is an exploded perspective view of the left handle bar portion.
FIG. 31 is a sectional view illustrating a manner in which a wire is securely bound.
FIG. 32 is a partial side elevational perspective view of a body frame illustrating a manner wherein a wire lock is accommodated.
FIG. 33 is a partial perspective view of the front frame illustrating a manner wherein the wire lock is accommodated.

### Mode for Carrying Out the Invention

FIG. 1 is a side elevational view of a motor-assisted bicycle according to an embodiment of the present invention. A body frame 2 of the motor-assisted bicycle includes a head pipe 21 positioned at a front portion of the vehicle body, a front frame 22 in the form of a pipe extending substantially horizontally and rearwardly from the head pipe 21, and a rear frame 23 connected to a rear end of the front frame 22. The rear frame 23 is a split frame formed from a pair of left and right aluminum die-cast products. The split frame has a bifurcated structure member having a coupling portion 231 at a location rather forwardly of the vehicle body, and a boss 232 for supporting a seat post 3 which extends obliquely rearwardly upwards from the boss 232 is formed at the coupling portion 231. The boss 232 has a tightening interference provided thereon such that the seat post 3 is supported with certainty by the boss 232 by tightening a clamper 233. If the clamper 233 is loosened, then the seat post 3 can be slidably moved upwardly and downwardly with respect to the boss 232, and the height of a seat 4 mounted at the top end of the seat post 3 can be adjusted.

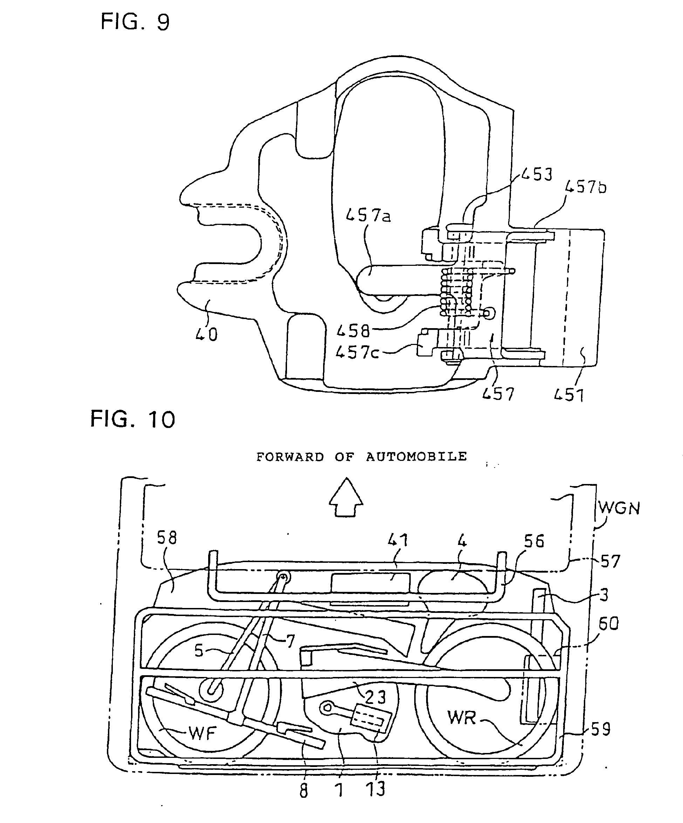

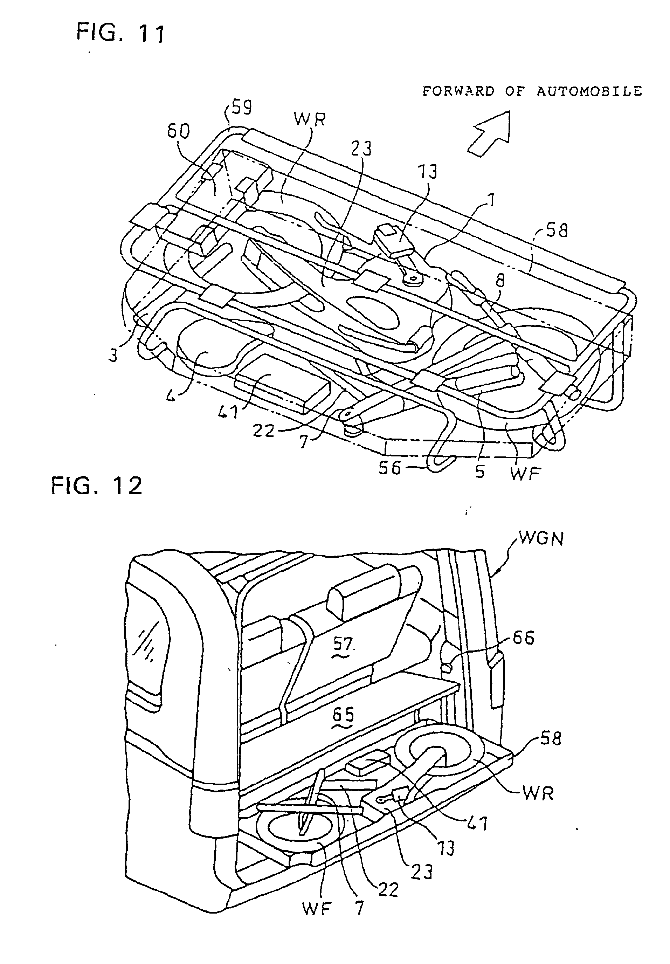

A front fork 5 is supported for turning motion on the head pipe 21 through a shaft portion formed at an upper portion of the front fork 5. A handle post 7 is coupled to an upper end of the shaft portion through a joint 6, and a steering handle bar 8 is coupled to an upper portion of the handle post 7. The joint 6 can be loosened by an operation of a knob 61, and the handle post 7 can be folded up around the joint 6 by the operation. The form of folding is hereinafter described with reference to FIGS. 10 and 11. A front wheel WF is supported for rotation at a lower end of the front fork 5. An end of a wire 82 extending downwardly from a brake lever 81 of the steering handle bar 8 is coupled to a front brake 9 provided for the front wheel WF.

The rear frame 23 is connected to the front frame 22 by a hinge 24 and a locking apparatus provided on the opposite side to the hinge 24, that is, on the left side of the vehicle body. If locking of the locking apparatus is canceled, then the vehicle body can be folded up around the hinge 24, and further, if the coupling of the hinge 24 is canceled, then the front frame 22 and the rear frame 23 can be disassembled from each other. Details of the locking apparatus and the hinge 24 are hereinafter described.

The appearance of the rear frame 23 as viewed in side elevation has a configuration wherein a portion thereof rather forwardly of the vehicle body has a comparatively great width and the width decreases rearwardly. A rear wheel WR serving as a driving wheel is supported for rotation between a pair of left and right rear ends of the rear frame 23. A rear brake 10 is provided on the rear frame 23, and a wire 83 from the steering handle bar 8 is extended until it is coupled to the rear brake 10.

The wire 83 includes two wires, and one of them is a rear brake wire 832 coupled to a rear brake 10 provided on the rear frame 23, and the other one is a speed change gear wire 831 coupled to a speed change gear 85 provided in the proximity of a rear end portion of the rear frame 23. The wire 83 is securely bound to lower portions of the front frame 22 by means of bands 84, 84 while it is extended rearwardly.

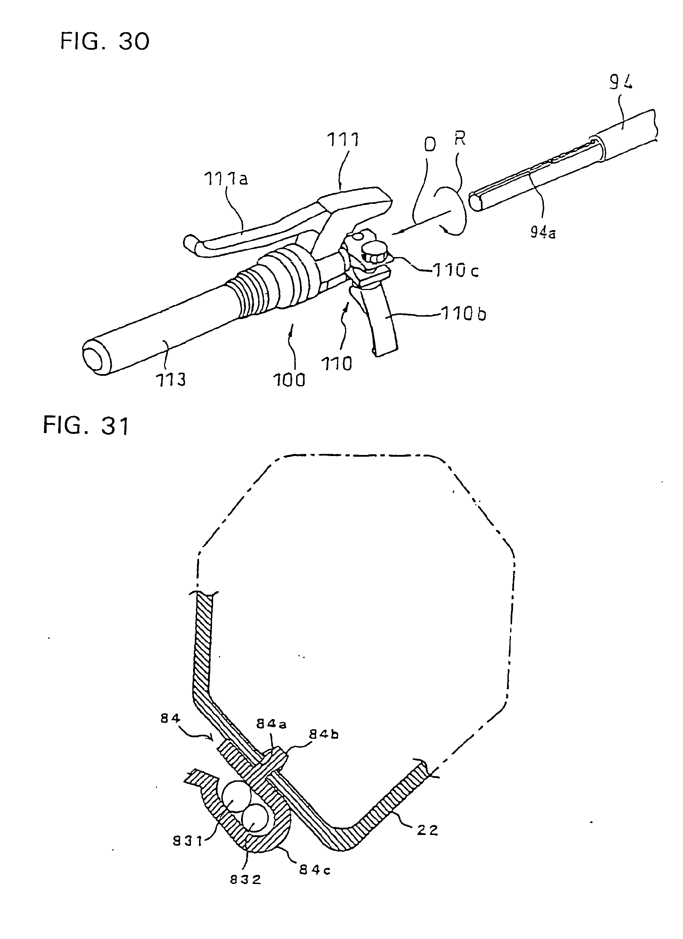

FIG. 31 is a sectional view illustrating a manner wherein the wire 83 is securely bound. Referring to the figure, the band 84 can be formed from a flexible material such as a resin and has a projecting portion 84b fitted in a hole 84a formed in the front frame 22, and a holding portion 84c which surrounds and holds the wire 83 (speed change gear wire 831, rear brake wire 832). The holding portion 84c is formed in a U-shape having an opening at the top thereof, and the wire 83 can be removably attached to the holding portion 84c through the opening.

A power assisting unit (assist unit) 1 disposed rearwardly of an extension line of the seat post 3 is suspended at a lower portion of the great width portion of the rear frame 23, that is, nearer to the front of the vehicle body. The..power assisting unit 1 is secured by fastening together with the rear frame 23 upon assembly of the rear frame 23 by a bolt 25 and a bolt 27 for fastening of the left and right split parts of the rear frame 23. The power assisting unit 1 includes an electric motor M for treadling force assistance disposed at a lowermost portion thereof, and a crankshaft 11 disposed upwardly forwardly of the electric motor M. A pair of cranks 12 are secured to left and right ends of the crankshaft 11, and a pedal 13 is provided at an end of each of the cranks 12. While the pedals 13 are used in a state wherein they extend horizontally in the leftward and rightward directions of the vehicle body, it is possible to adopt a hinge for each of the connection portions between the pedals 13 and the cranks 12 such that, when not used, the pedals 13 can be folded up so as to extend along the cranks 12.

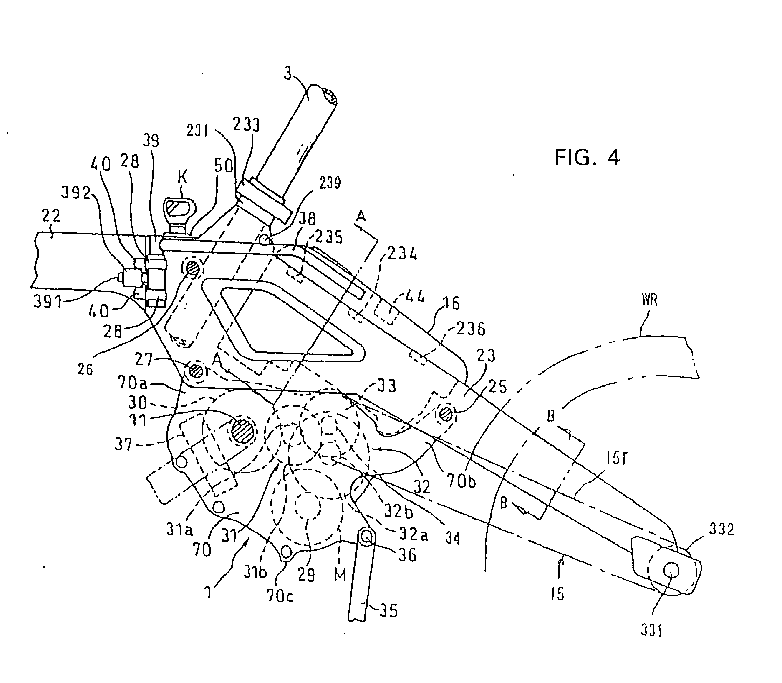

Treadling force inputted from the pedals 13 and assisting power generated by the electric motor M so as to moderate the treadling force in response to the treadling force are combined by a transmission apparatus including a gear in the power assisting unit 1, and output power of the transmission apparatus is extracted as rotation of a driving sprocket wheel (indicated by reference numeral 33 in FIG. 4) covered with a sprocket wheel cover 14. A chain 15 is provided which transmits the rotation of the driving sprocket wheel to the rear wheel WR. It is to be noted that the diameters of the front wheel WF and the rear wheel WR are both 16 inches.

In a space surrounded by the great width portion and the coupling portion 231 of the rear frame 23 and the bolt 25 which couples the pair of left and right rear frames 23 at rear portions thereof to each other (or a boss which supports the bolt), a battery box 16 for accommodating a battery which serves as a power supply to the electric motor M and other electric parts is mounted. It is to be noted that, in order to couple the rear frame 23 split into the left and right parts to each other, the bolts 25, 27 described above are provided, and tightening elements 26, 239 having a knock pin interposed therein for improving the accuracy of fastening are provided in the proximity of the connection location of the rear frame 23 to the front frame 22 are provided.

The seat post 3 is supported by the boss 231 provided at an upper portion of the rear frame 23, and an extension of the seat post 3 which projects downwardly from the supported portion of the seat post 3 passes between the tightening elements 26 and 239. The seat post 3 is supported by the boss 231 tightened by the clamper 233 and is positioned also by the tightening elements 26, 239 so that it is supported with a high degree of accuracy. Particularly, the load of the driver applied to the seat post 3 acts to pivot the seat post 3 in the clockwise direction in FIG. 4 around the boss 231. At this time, the pivotal motion of the seat post 3 is restricted by a boss formed on the tightening element 26, and the load is received by a side face of the boss of the tightening element 26. Since the load applied to the seat post 3 is distributed to a plurality of locations in this manner, the strength of the rear frame 23 itself is not set unnecessarily high.

The seat post 3 extends between the rear frame 23 split to the left and the right of the vehicle body, and a lower end thereof is positioned below a bolt 26 which connects the split parts of the rear frame 23 to each other. Due to such a structure as just described, the seat post 3 is secured not only by the boss 232 but also by the bolt 26 which is positioned in the proximity of the lower end of the seat post 3, and the load applied to the seat 4 is carried with certainty.

Further, the seat post 3 can be pulled out and separated fully from the boss 233. Furthermore, the coupling structure between the seat post 3 and the boss 233 is adopted also for coupling between the seat 4 and the seat post 3, and the seat 4 and the seat post 3 can be coupled to and separated from each other readily.

Further, the seat post 232 has, at a lower portion thereof, an open end so that the seat tube 3 can be projected downwardly therefrom. Meanwhile, a power assisting unit (assist unit) 1 is disposed such that it is positioned rearwardly with respect to a downward extension line of the seat post 232. Consequently, the seat tube 3 can project downwardly farther than the open end of the seat post 232, and the length of the seat tube 3 can be increased. As a result, the range of adjustment of the seat, that is, the seat height adjustment margin, can be increased.

When the vehicle is not used, if the clamper 233 is loosened, then the seat post 3 can be further moved downwardly. As indicated by an alternate long and two short dashes line in the figure, the stroke of upward and downward movement of the seat post 4 is set such that, at a lowermost position of the seat 4, the seat post 3 passes downwardly through the rear frame 23 and the lower end of the seat post extends to a position forwardly of a power assisting unit (assist unit) 1. A wire passing hole 72 is perforated at the lower end of the seat post 3 so that a theft preventing wire 71 can pass therethrough. If the theft preventing wire 71 (or chain, hereinafter referred to as "wire") which can pass through the wire passing hole 72 is, for example, extended to and around a front wheel WF and locked by means of a key 73, rotation of the front wheel WF is limited to a range within which the theft preventing wire 71 extends. Since the vehicle is substantially held against movement in this manner, a third party cannot ride or move the vehicle body. Accordingly, not only theft prevention of the vehicle body can be anticipated, but also the possibility that the seat post 3 may be pulled out by a third party can be avoided while the structure that the seat post 3 can be pulled out and separated from the boss 233 is adopted. Further, in the present embodiment wherein the frame is split to the front and the rear, since the front wheel on the front frame side and the seat post on the rear frame side are connected to each other, also when the frame is disassembled, the locking acts effectively.

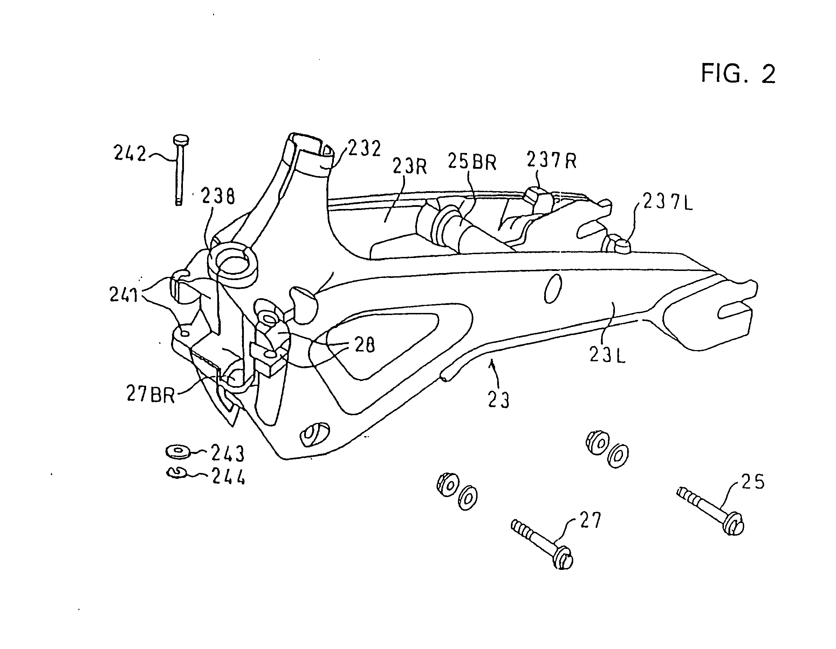

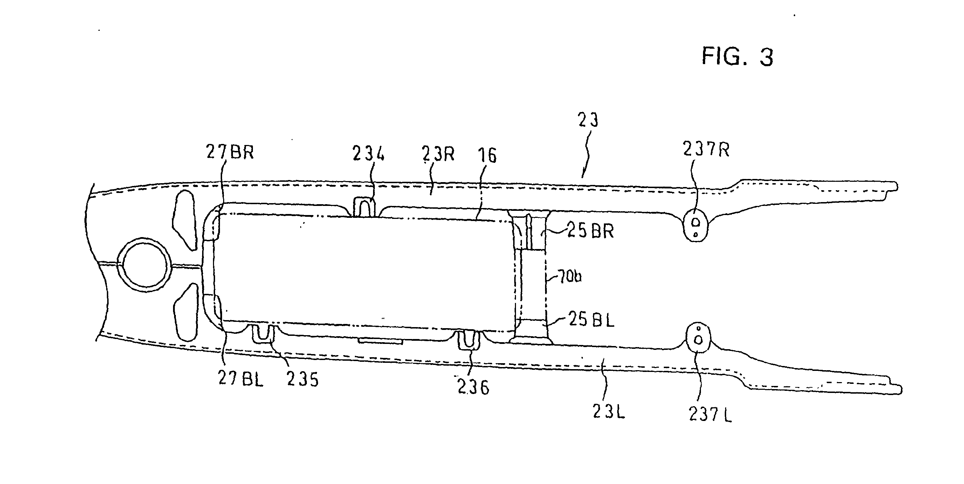

FIG. 2 is a perspective view of the rear frame 23 as viewed from leftwardly forwardly of the vehicle body, and FIG. 3 is a plan view of the rear frame 23. Referring to the figures, the rear frame 23 is composed of a left part 23L and a right part 23R, in which bosses 25BL, 25BR, 27BL, 27BR through which the bolts 25, 27 can extend are provided. While a boss for supporting a knock pin is formed also on the tightening element 26, it is not shown in FIG. 2 or 3. A hanger portion 70b (refer also to FIG. 4) formed at an upper end of the power assisting unit 1 is disposed in a sandwiched manner between the bosses 25BL, 25BR and between the bosses 27BL, 27BR, and is attached by fastening together with the left part 23L and the right part 23R.

Seats 234, 235, 236 for attaching the battery box 16 and seats 237L, 237R for attaching the rear brake 10 are formed on an upper face of the rear frame 23. Further, a mounting seat 238 for mounting a power supply switch for supplying current from the battery to the power assisting unit 1 and so forth is formed at a portion of the upper face of the rear frame 23 forwardly of the seat post 232 for the seat post. A power supply switch 50 which is operated with a key K is mounted on the mounting seat 238. The battery box 16 is supported on the seats 234, 235, 236 and accommodated between the left part 23L and the right part 23R of the rear frame 23.

Further, a boss 241 which is one of portions of the hinge 24 and a boss 28 for supporting a pin (not shown) of the locking apparatus for rotation thereon are formed at a front end of the rear frame 23, that is, a mating face of the rear frame 23 with the front frame 22. A pin 242 is inserted in the boss 241, and a washer 243 and a snap ring 244 are mounted at an end of the pin 242. A hook (which is hereinafter described) on the front frame 22 side which forms part of the hinge engages with the pin 242.

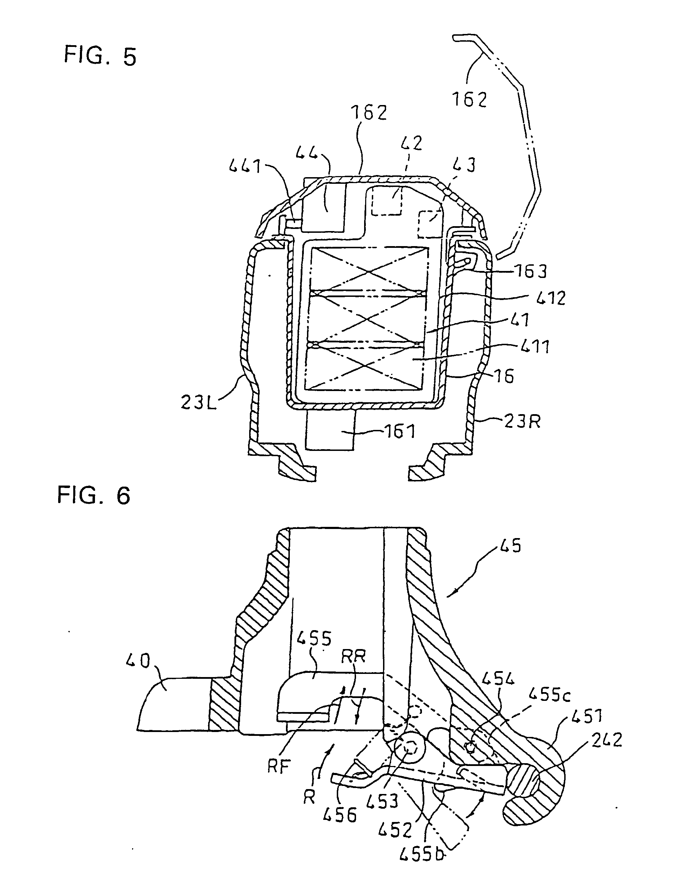

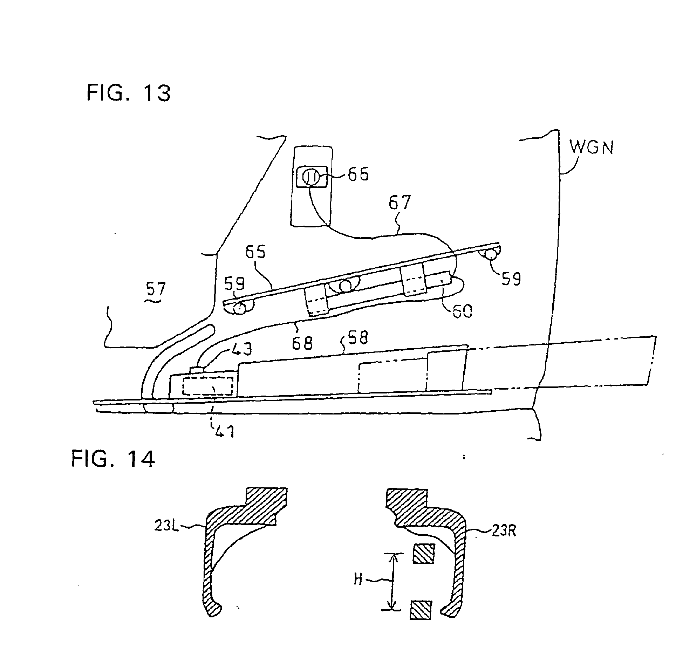

FIG. 4 is a partial side elevational view illustrating a mounting positional relationship of the rear frame 23 with the battery box 16 and the power assisting unit 1, FIG. 5 is a sectional view taken along line A-A of FIG. 4, and FIG. 14 is a sectional view taken along line B-B. Referring to FIG. 4, hangers 70a, 70b for connecting the power assisting unit 1 to the rear frame 23 are formed on a circumference of a case body 70 of the power assisting unit 1. A boss is formed at an end of each of the hangers 70a, 70b, and the bolts 25, 27 extend through the bosses, respectively. The bolts 25, 27 further extend through the boss 25BL and so forth of the rear frame 23 to fasten the hangers 70a, 70b to the rear frame 23 so that the power assisting unit 1 is suspended on the rear frame 23. The case body 70 of the power assisting unit 1 is preferably formed from a molded part of a resin for the object of reduction in weight.

Since the securing portion of the power assisting unit 1 to the rear frame 23 and the fastening portion between the left and right split parts of the rear frame 23 are provided collectively at one place in this manner, the number of parts can be reduced and the space in which the securing portion and the fastening portion are provided can be reduced in size and reduction of the size of the rear frame 23 at this portion can be anticipated.

A treadling force inputting gear 30 is coupled to the crankshaft 11 through a one-way clutch not shown, and the treadling force inputting gear 30 meshes with a small gear 31a of a combination gear 31. Meanwhile, a large gear 32a of an assisting power gear (assist gear) 32 is provided such that it meshes with a pinion 29 of the electric motor M, and the assist gear 32 which rotates integrally with the large gear 32a meshes with a small gear 32b of the combination gear 31. A large gear 31b of the combination gear 31 meshes with an output gear 34 connected to a shaft of a driving sprocket wheel 33. The case body 70 and the assist gear 32 of the power assisting unit 1 are preferably formed from molded parts of a resin for the object of reduction in weight, and the assist gear 32 is preferably formed as a helical gear from the point of view of the stillness and so forth.

An axle 331 for supporting the rear wheel WR is provided at a rear end of the rear frame 23, and a driven sprocket wheel 332 is coupled to the axle 331 through a one-way clutch not shown. The chain 15 extends between the driving sprocket wheel 33 and the driven sprocket wheel 332.

Referring to FIG. 14, reference character H denotes a range of the position in the vertical direction of a tension side 15T of the chain 15 in the right side frame 23R of the rear frame 23. As can be seen from FIGS. 4 and 14, the tension side 15T of the chain 15 is covered substantially entirely with the right side frame 23R as viewed in side elevation. Accordingly, the chain 15 can be covered without provision of a cover for exclusive use for the chain 15, and reduction of the number of parts can be anticipated.

In this manner, rotation of the electric motor M is transmitted to the combination gear 31 through the pinion 29 and the assist gear 32 while treadling force inputted from the crankshaft 11 is transmitted to the combination gear 31 through the treadling force inputting gear. Then, the treadling force and the assisting power are combined by the combination gear 31 and transmitted to the driving sprocket wheel 33, and further transmitted to the rear wheel WR through the driven sprocket wheel 332. A controller 37 disposed at a front portion in the case body 70 controls the rotation of the motor M based on a treadling force value inputted thereto from treadling force detection means not shown.

A pivot 36 for supporting a main stand 35 made of a molded part of aluminum for pivotal motion is mounted at a rear lower portion of the case body 70. A projection 70c provided at a lower end of the case body 70 is a foot portion for allowing the rear portion of the bicycle including the rear frame 23 to stand by itself when the front frame 22 and the rear frame 23 are disassembled from each other, and when the rear portion of the bicycle is placed on the ground, it can stand by itself on the ground by means of the projection 70c and the rear wheel WR.

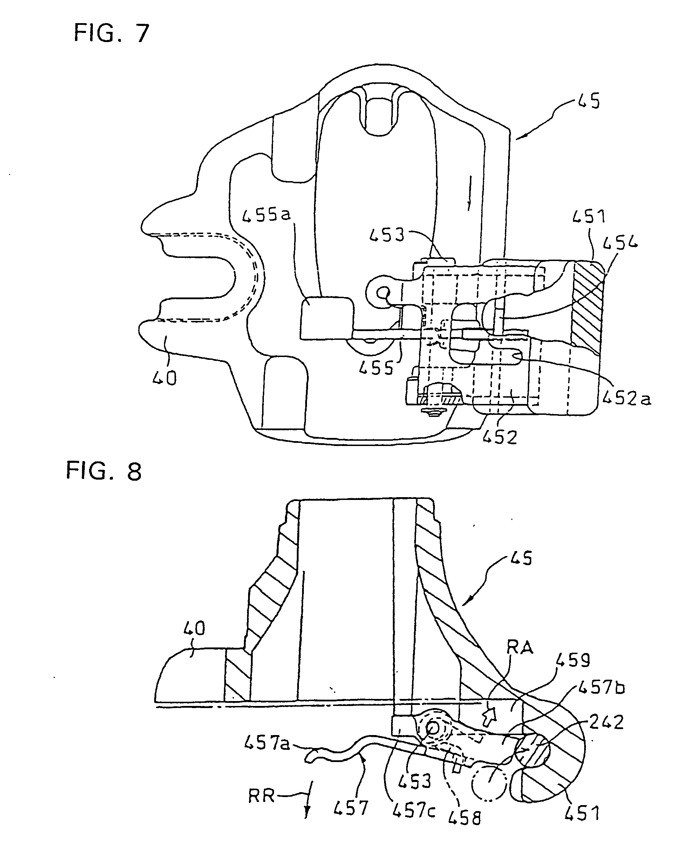

A lock pin 39 having a lock lever 38 is fitted in a pair of bosses 28, 28 provided at a front end of the rear frame 23. A bolt 391 is provided for pivotal motion around the lock pin 39, and a nut 392 is screwed on the bolt 391. The bolt 391 extends in a groove (refer to FIGS. 6, 7 for a detail shape) of an engaging portion 40 formed such that it projects from the front frame 22, and one face of the nut 392 contacts with the engaging portion 40 to form a tightening face. A central portion of the lock pin 39 on which the bolt 391 is mounted is eccentric with respect to the hole of the boss 28 such that the contacting strength between the nut 392 and the engaging portion 40 is adjusted by pivoting the lock lever 38. In a state wherein the lock lever 38 is pivoted to a position in which it extends along the rear frame 23 as shown in the figure, the nut 392 and the engaging portion 40 contact strongly with each other so that the front frame 22 and the rear frame 23 are coupled to each other strongly. The highest value of the contacting strength between the tightening face of the nut 392 and the engaging portion 40 can be determined by the amount of turning motion of the nut 392.

On the other hand, if the lock lever 38 is pivoted in a direction away from the rear frame 23, that is, toward a direction perpendicular to the vehicle body, then the nut 392 is displaced in a direction (forwardly of the vehicle body) away from the engaging portion 40 in response to the amount of eccentricity of the lock pin 39 to weaken the tightening by the nut 392. As a result, the bolt 391 can be pivoted with respect to the lock pin 39 to disengage the nut 392 and the engaging portion 40 from each other, and the front frame 22 and the rear frame 23 can be folded up around the hinge 24.

A power supply switch 50 which is operated with a key K is mounted on the mounting seat 238 (FIG. 2) provided at a front portion of the rear frame 23, that is, on the front side of the boss 232 for supporting the seat post.

The battery box 16 is supported by the seats 234, 235, 236 and accommodated between the left part 23L and the right part 23R of the rear frame 23. A battery 41 is accommodated in the battery box 16. The battery 41 is formed in a pack structure in which a plurality of cells 411 each formed from, for example, a nickel hydrogen battery are accommodated. An indicator 42 for indicating the remaining amount by an LED display is provided at an upper portion of a case 412. Also a charging connector 43 which is used when the battery 41 is removed from the battery box 16 and charged up and a fuse (not shown) are provided in the case 412. A terminal (not shown) for connecting the battery 41 and the controller 37 to each other is accommodated in a projecting portion 161 at a bottom portion of the battery box 16.

A lid 162 is provided for the battery box 16, and the lid 162 is mounted on the battery box 16 using a hinge 163. In the figure, an alternate long and two short dashed line illustrates a state wherein the lid 162 is open. A window (not shown) is provided in the lid 162 so that the indicator 42 can be seen therethrough, and a key apparatus 44 is provided on the lid 162. The key apparatus 44 has a pawl 441 which can be moved out from or into the key apparatus 44 by turning a key (which is preferably used commonly as the key K for operating the power supply switch), and the pawl 441 is engaged with the battery box 16 to lock the battery box 16.

Now, the hinge 24 for connecting the front frame 22 and the rear frame 23 to each other is described in detail. FIG. 6 is a sectional plan view of a rear end portion of the front frame 22 including the hinge 24, and FIG. 7 is a front elevational view (a view as viewed from rearwardly of the vehicle body) of the same. It is to be noted that the rear end portion can be formed from a rear end part (hereinafter referred to as "end block") integrated by welding to a part in the form of a pipe which forms the front frame 22. Referring to both figures, a hook 451 is formed on the end block 45 and has dimensions and a position set such that it is fitted for engagement with the pin 242 between the bosses 241, 241 provided on the rear frame 23.

A lock plate 452 is provided such that it closes up an opening of the hook 451 formed in a U-shaped configuration. The lock plate 452 is supported for pivotal motion on the end block 45 by a pin 453. An operation lever 455 supported for pivotal motion by a spring pin 454 is provided on the end block 45. The operation lever 455 has an operation portion 455a for being pressed by a finger, and a hook 455b. The operation lever 455 is connected to the lock plate 452 by a tension spring 456, and the hook 455b is exposed to the front side of the lock plate 452, that is, the rear frame 23 side through a cutaway window 452a formed in the lock plate 452 and engages with the frame of the cutaway window 452a. Since the hook 455b engages with the lock plate 452, pivotal motion of the lock plate 452 in a direction indicated by an arrow mark R is restricted although the tension spring 456 acts upon the lock plate 452. The operation lever 455 has a contact portion 455c for contacting with the end block 45 in the proximity of the pivotally supported portion thereof so that pivotal motion thereof in a direction indicated by an arrow mark RR from the position shown is prohibited.

Due to the configuration, the opening of the hook 451 is closed up with an end portion of the lock plate 452, and therefore, the pin 242 held in engagement with the hook 451 cannot escape from the hook 451. Accordingly, even if the locking apparatus which is operated with the lock lever 38 is canceled, the body frame (composed of the front frame and the rear frame) is merely permitted to be folded up around the pin 242.

In order to further disassemble the body frame into the front frame 22 and the rear frame 23, the operation portion 455a of the operation lever 455 is pushed in toward the interior (in a direction indicated by an arrow mark RF) of the end block 45. Consequently, the operation lever 455 is pivoted around the pin 454, and the lock plate 452 is pivoted around the pin 453 so that the opening of the hook 451 is opened. Accordingly, the pin 242 can escape from the hook 451, and the body frame can be disassembled completely at the connection location between the front frame 22 and the rear frame 23.

The engagement of the hook 455b of the operation lever 455 and the lock plate 452 is canceled as a result of the pivotal motion of the operation lever 455 and the lock plate 452, and even after the pushing at the operation lever 455 is stopped, the open state of the opening is maintained. Therefore, the pressing operation of the operation lever 455 and the disassembly operation of the body frame can be performed stepwise and readily using both hands.

In order to assemble the disassembled body frame back into a unitary block, the pin 242 is caught by the hook 451 first, and then the lock plate 452 is pushed into the hook 451 side until the hook 456b of the operation lever 455 and the lock plate 452 are engaged with each other. By the operation, the opening of the hook 451 is closed up. Then, the joining faces of the front frame 22 and the rear frame 23 are opposed to each other, and the nut 392 of the locking apparatus shown in FIG. 4 is engaged with the engaging portion 40 and the lock lever 38 is pivoted in a direction along the rear frame 23 to lock the rear frame 23. The degree of the close contact between the nut 392 and the engaging portion 40 when the lock lever 38 is positioned so as to extend along the rear frame 23 can be adjusted by the position of the nut 392 with respect to the bolt 391.

The front frame 22 which has the end block 45 described above has a hollow pipe structure formed from an extruded member of aluminum and has an end portion which is opened when the body frame 2 is folded up as described above. In particular, the front frame 22 is a tubular vessel wherein, in ordinary use of the vehicle, the front frame 22 is closed up and such an operation that a human being puts its hand into the front frame 22 from the outside is impossible, but when the body frame 2 is folded up, the one end of the front frame 22 is opened to allow intervention of a human being.

Accordingly, an article which is not used upon driving but is used when the operation stops can be accommodated in the front frame 22 having the form of a tubular vessel. For example, when the motor-assisted bicycle is parked, a theft preventing wire locking means (wire lock) for linking the vehicle body to a fixed structure is sometimes used. For the wire lock, a wire lock of a comparatively great length is used in order to provide a degree of freedom to the locking manner. However, it is cumbersome to carry a wire lock to every destination of movement, and also there is the possibility that the wire lock may be lost. In order to solve such problems as just described, the hollow portion of the front frame 22 is utilized conveniently.

Subsequently, a modification to the hinge 24 is described. FIG. 8 is a sectional plan view of a rear end portion of the front frame 22 according to the modification to the hinge 24 and FIG. 9 is a front elevational view of the same, and like reference characters to those in FIGS. 6 and 7 denote like or equivalent elements. Referring to the figures, the pivot pin 242 secured to the rear frame 23 side is held in engagement with the hook 451, and a lock plate 457 is provided at a position at which it closes up the opening (recess) of the hook 451 so that the pivot pin 242 may not escape. The lock plate 457 has an operation portion 457a formed so as to be caught by a finger, and a locking portion 457b for closing up the recess, and is supported for pivotal motion on the end block 45 using the pin 453. A spring (torsion coil spring) 458 is held in engagement with the lock plate 457 so as to exert a force in a direction in which the operation portion 457a is moved toward the end block 45, or in other words, in a direction in which the locking portion 457b is moved away from the end block 45. However, since a rear end of the locking portion 457b, that is, an end portion 452c on the operation portion 457a side contacts with an end face of the end block 45, the lock plate 457 is not pivoted in the direction in which it moves away from the end block 45 farther than a position at which the lock plate 457 is opposed to the recess.

Meanwhile, a relief portion (recess) 459 is formed on the end block 45 so that the locking portion 457b can be pivoted in a direction (of an arrow mark RA) in which it moves toward the end block 45. The depth of the relief portion 459 is set so that the locking portion 457b escapes to the end block 45 side to open the recess of the hook 451.

Due to the configuration, since the lock plate 457 is biased by the spring 458 and the opening of the hook 451 is closed up with the locking portion 457b, the pivot pin 242 cannot escape from the hook 451. Accordingly, only if the locking apparatus which is operated with the lock lever 38 is canceled, the body frame is merely permitted to be folded up around the pivot pin 242.

In order to further disassemble the body frame into the front frame 22 and the rear frame 23 after it is folded up, the operation portion 457a of the lock plate 457 is caught with a finger and pulled in a direction (a direction indicated by an arrow mark RR) in which it is moved away from the end block 45. Consequently, the locking portion 457b is retracted into the relief portion 459 and the opening of the hook 451 is opened. Accordingly, the pivot pin 242 can escape from the hook 451, and the body frame can be disassembled completely at the connection location between the front frame 22 and the rear frame 23.

In order to assemble the disassembled body frame back into a unitary block, the pivot pin 242 is pressed against the locking portion 457b to retract the locking portion 457b into the relief portion 459. If the pivot pin 242 is accommodated into the hook 451, then the pressing force of the pivot pin 242 against the locking portion 457b is canceled. As a result, the locking portion 457b is pivoted in a direction opposite to an arrow mark RA by the biasing force of the spring 453 and the opening of the hook 451 is closed up.

It is to be noted that, in the embodiment of the hinge 24 described above, the pivot pin 242 is provided on the rear frame 23 side, and the locking apparatus including the hook 451 for being engaged by the pivot pin 242, the lock plates 452, 457, the operation lever 455 and so forth is provided on the front frame 22 side. However, conversely the pivot pin 242 may be provided on the front frame 22 side while the lock plate 452 and so forth are provided on the rear frame 23 side.

FIG. 10 is a partial plan view of a four-wheel automobile (here, a wagon type car or an RV car is presupposed) which carries a motor-assisted bicycle, and FIG. 11 is a perspective view of the same from forwardly of the automobile. Referring to the figures, a tray 58 for accommodating a motor-assisted bicycle is provided for advancing and retreating movement in the forward and backward directions of the automobile at a rear portion of the automobile WGN. A front frame 56 is secured to a location below a rear seat 57 in the automobile WGN and defines a limit to the forward position of the tray 58 in the automobile WGN. An upper frame 59 is secured in the automobile WGN rearwardly of the front frame 56 and supports a shelf plate (not shown) at an upper portion thereof. The tray 58 preferably made of a resin material is disposed for sliding movement in the forward and backward directions of the automobile under the guidance of rails not shown in a space surrounded by the front frame 56 and the upper frame 59. A charger 60 for the battery 41 is held at a left portion of the upper frame 59.

Now, a loading procedure for loading the motor-assisted bicycle described above in a folded up state into the automobile is described. In order to load the motor-assisted bicycle into the automobile WGN, the tray 58 is first drawn out to the rear of the automobile to provide a free space above the tray 58. Then, the lid 162 of the battery box 16 is opened first and the battery 41 is removed from the motor-assisted bicycle and accommodated to a front middle portion of the tray 58. Then, the clamper 233 is loosened and the seat post 3 is pulled out from the rear frame 23, and then the seat post 3 and the seat 4 are disassembled. The seat 4 is accommodated to the right side of the battery 41, and the seat post 3 is accommodated to the right corner of the tray 58.

Then, the body frame is disassembled. Prior to the disassembly, the knob 61 of the joint 6 is operated to fold up the handle post 7 around the joint 6. Then, the lock lever 38 is operated to cancel the locking of the connection location between the front frame 22 and the rear frame 23 to fold up the body frame around the pivot pin 242. Then, the operation lever 455 (the example of FIG. 6) is pushed or the lock plate 457 (the example of FIG. 8) is pulled to move the pivot pin 242 out of the hook 451 of the front frame 22 to disassemble the body frame. The front frame 22, handle post 7, steering handle bar 8, front fork 5 and front wheel WF are accommodated generally to a location near to the left side of the tray 58. On the other hand, the rear frame 23, power assisting unit 1 and rear wheel WR are accommodated generally to another location near to the right side of the tray 58 after the pedals 13 are folded.

FIG. 12 is a perspective view of a rear portion of the automobile WGN, and FIG. 13 is a partial sectional view of the automobile WGN. In a condition wherein the tray 58 is pulled out as shown in FIG. 12, the motor-assisted bicycle is positioned almost entirely rearwardly of the automobile from the range covered with the shelf plate 65, and a user can load or unload the electrically powered automobile into or from the automobile readily without being disturbed by the shelf plate 65.

A plug socket 66 for AC 100 volt is provided on an inside side wall of the automobile WGN. As seen in FIG. 13, power is supplied from the plug socket 66 through a cable 67 to the charger 60 mounted on the back side of the shelf plate 65, and direct current of a predetermined voltage obtained by rectification by the charger 60 is supplied to the battery 41 through a cable 68. It is to be noted that the cable 68 and the battery 41 are connected to each other through the connector 43.

In this manner, by utilizing the plug socket 66, for example, the time until the automobile arrives at a destination such as a resort can be used effectively to charge up the battery 41 with a generator driven by an engine of the automobile WGN.

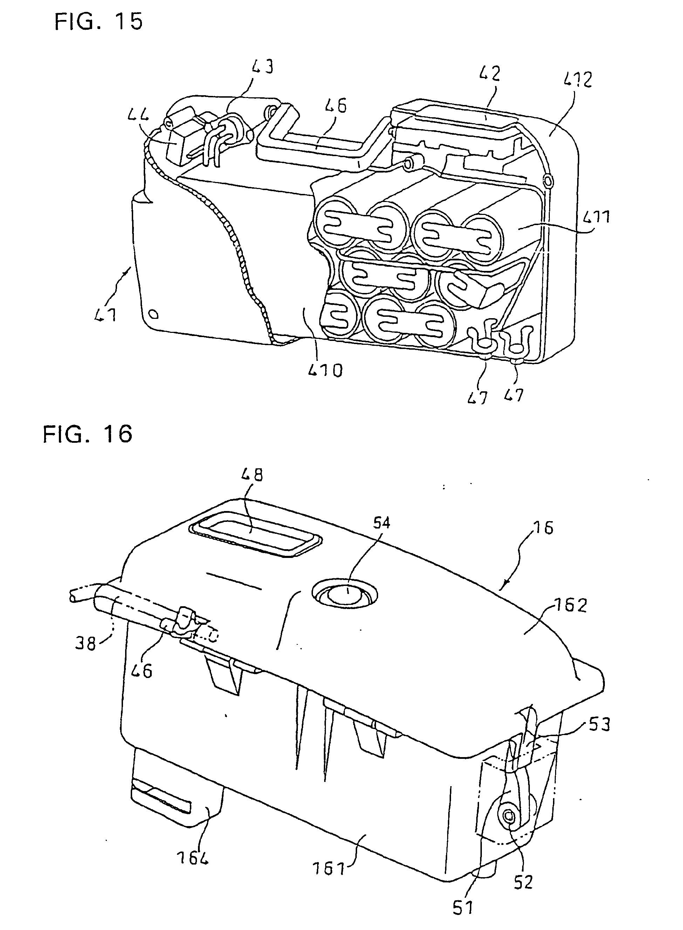

FIG. 15 is a perspective view, partly broken, showing a structure of a battery. Referring to the figure, a battery 41 includes a battery body (for example, twenty nickel hydrogen cells piled up in rows and columns) 411 packed up in a package 410 of a shrink film, and a case 412 of two-split molded parts of a resin for accommodating the battery body 411. The case 412 has provided thereon an indicator 42 including a plurality of LEDs to be lit so as to indicate the battery remaining amount as the number of lit ones of the LEDs, a connector 43 for charging, and a fuse 44. Further, a handle 46 to be used to carry the battery 41 or load or unload the battery 41 into the battery box 16 is attached for pivotal motion on the case 412. A pair of terminals 47, 47 connected to the battery body 411 are provided on the bottom of the case 412.

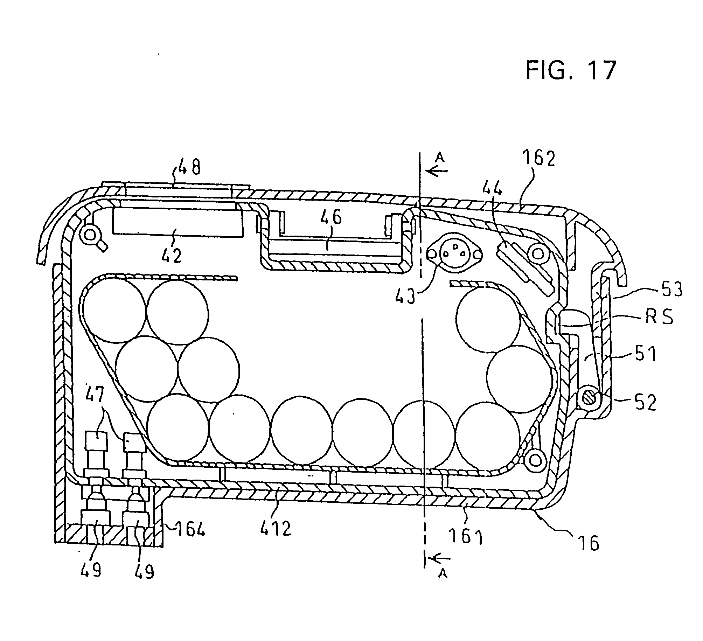

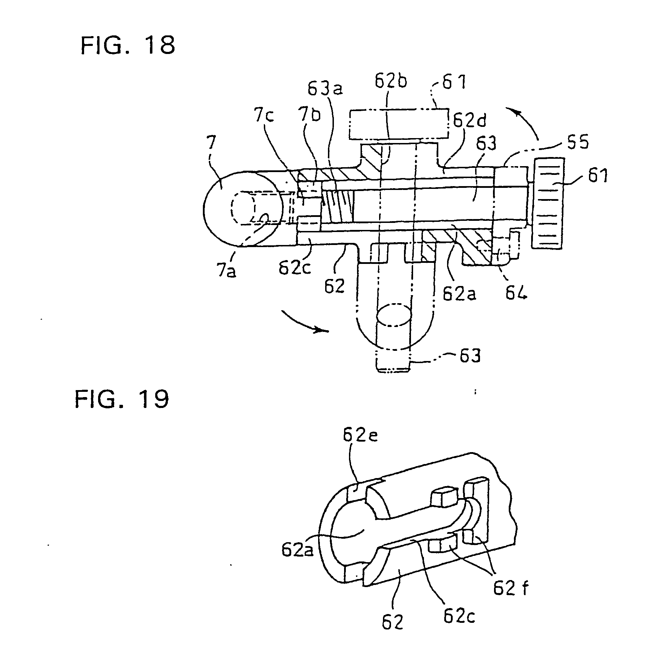

FIG. 16 is a perspective view showing an appearance of the battery box 16, FIG. 17 is a side elevational sectional view, and FIG. 18 is a view as viewed in a direction indicated by arrow marks A-A of FIG. 18. Referring to the figures, the battery box 16 is supported by the seats 234, 235 and 236 described hereinabove and accommodated between the left part 23L and the right part 23R of the rear frame 23 such that the lengthwise direction thereof coincides with the forward and rearward directions of the vehicle body. The battery box 16 includes a box body 161 which is open at the top portion thereof so as to allow the battery 41 to be loaded and unloaded from above, and a lid 162 which covers the open top of the box body 161. The lid 162 is mounted for pivotal motion on the box body 161 using a hinge 163 so that it can be pivoted open in a sideward direction of the vehicle body. An alternate long and two dashes line in FIG. 16 illustrates a state wherein the lid 162 is open. Since the box body 161 is disposed such that the lengthwise direction thereof coincides with the forward and rearward directions of the vehicle body, the opening at the open end is greater than that where the box body 161 is disposed otherwise such that the lengthwise direction thereof is substantially perpendicular to the forward and rearward directions of the vehicle body, and consequently, the loading or unloading operation of the battery 41 is facilitated.

A window 48 is provided on the lid 162 so that the indicator 42 can be observed therethrough, and a key apparatus 54 is provided on the lid 162. The key apparatus 54 has a pawl 541 which can be moved out from or into the key apparatus 54 by turning a key (which is preferably used commonly as a key for operating the power supply switch), and the pawl 541 is engaged with an upper end of the box body 161 to lock the box body 161.

The battery 41 is accommodated in the box body 161, and a terminal box 164 is formed on the bottom of the box body 161. A pair of terminals 49 to be coupled to the terminals 47 of the battery 41 side are accommodated in the terminal box 164. The terminals 49 are connected to the controller 37 described hereinabove with a cable not shown. A U-shaped member 46 is provided at an upper portion of the box body 161 such that it projects sidewardly through a recess formed on an edge of the lid 162. The U-shaped member 46 is used as a receiving member for supporting the lock lever 38 at a position at which it extends along the rear frame 23.

A lock arm 51 for holding the battery 41 in the battery box 16 is provided at a location of the box body 161 rather near to the rear of the vehicle body. The lock arm 51 is supported for pivotal motion on the box body 161 using a pin 52 so that it can be tilted in the forward and backward directions of the vehicle body. At the location where the lock arm 51 is provided, the box body 161 has a dual wall, and the lock arm 51 is accommodated in the dual wall. The lock arm 51 extends upwardly from the pin 52, and an end thereof is exposed to the inner side of the box body 161 through the inner side wall of the dual wall portion. The position and the shape of the lock arm 51 are set so that the end thereof projecting to the battery 41 side may be fitted in a recess RS of the case 412 of the battery 41.

A depending piece 53 is mounted on or formed integrally with an edge of the lid 162 rather near to the rear of the vehicle body. The position and the shape of the depending piece 53 are set so that, in a state wherein the lid 162 is closed, the depending piece 53 is inserted between the back (face on the rear side of the vehicle body) of the lock arm 51 and the outer side wall of the dual wall and exerts pressing force against the back, but in another state wherein the lid 162 is open, the depending piece 53 provides a space in which the lock arm 51 can be tilted toward the outer side wall. If the seat is positioned at the lowermost position as indicated by a broken line in FIG. 1 and the theft preventing wire 71 is locked in a state wherein the wire has no slack, then the seat is positioned within the range of opening and closing of the lid 162 and the seat cannot be moved upwardly by the wire. Consequently, even if the user forgets to lock the lid, unloading of the battery is disabled by the seat, and this makes locking of the battery more advantageous.

Now, the joint 6 for coupling the handle post 7 to the front fork 5 is described in detail. FIG. 18 is a sectional plan view of the joint 6, and FIG. 19 is a partial perspective view. A joint block 62 provided at a top portion of the front fork 5 has formed therein a hole 62a through which a shaft 63 of the knob 61 can path horizontally and a hole 62b which extends perpendicularly to the hole 62a. The holes 62a, 62b have cutaway slots 62c, 62d, respectively, such that the shaft 63 can be turned within a horizontal plane of the joint block 62.

A male thread 63a formed at an end of the shaft 63 is screwed into a female thread 7a formed at a lower end of the handle post 7. Formed at a lower end of the handle post 7 are a hub 7b which fits with an end face of the joint block 62 and a protrusion 7c which is engaged with recesses 62e formed on the end face of the joint block 62 to define the direction with respect to the joint block 62. A projection 62f with which the hub 7b of the handle post 7 fits and which has a vertical groove with which a protrusion 7c is engaged is formed around a terminating end portion of the cutaway slot 62c. Further, a stopper 55 supported for pivotal motion by a pin 64 is provided at an end portion of the joint block 62 on the rear side of the vehicle body.

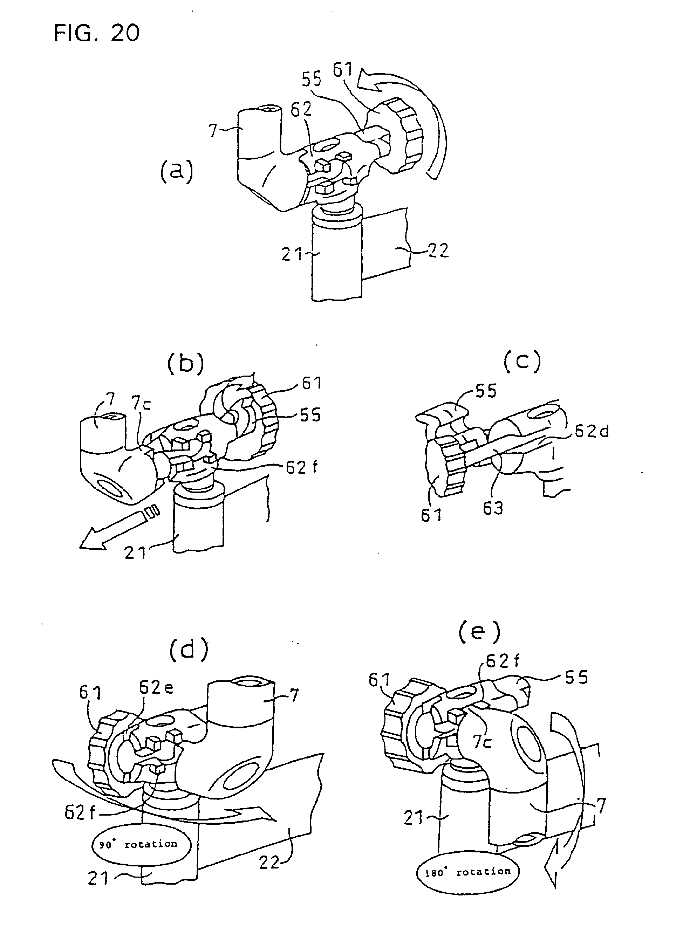

A folding up operation of the handle post'7 is described. FIG. 20 is a perspective view of the joint 6 illustrating a folding up procedure. FIG. 20(a) shows the joint 6 when the motor-assisted bicycle is used. In this state, the handle post 7 stands vertically upwardly, and a lower end of the handle post 7 is fitted with the joint block 62. In order to fold up the handle post 7, the knob 61 is first pivoted to loosen the tightening.

Then, the stopper 55 is opened upwardly around the pin 64 as shown in FIG. 20(b), and the knob 61 is urged in the forward direction of the vehicle body. When the stopper 55 is opened, as shown in a view as viewed from the knob 61 side in FIG. 20(c), a great space is produced between the knob 61 and the joint block 62, and the knob 61 can be displaced in the forward direction of the vehicle body. When the knob 61 is displaced in the forward direction of the vehicle body, the protrusion 7c of the handle post 7 moves out of the recesses 62e of the joint block 62 (refer to FIG. 20(b)). As a result, the shaft 63 is allowed to pivot in the counterclockwise direction (leftward direction facing the advancing direction of the vehicle) as viewed in plan. FIG. 20(d) is a view illustrating a state wherein the shaft 63 is pivoted by 90°.

Then, the handle post 7 is tilted vertically downwardly as shown in FIG. 20(e) until the protrusion 7c is brought into alignment with the vertical groove of the projection 62f. Finally, the knob 61 is turned to screw the shaft 63 into the handle post 7 to tighten the shaft 63 to the handle post 7.

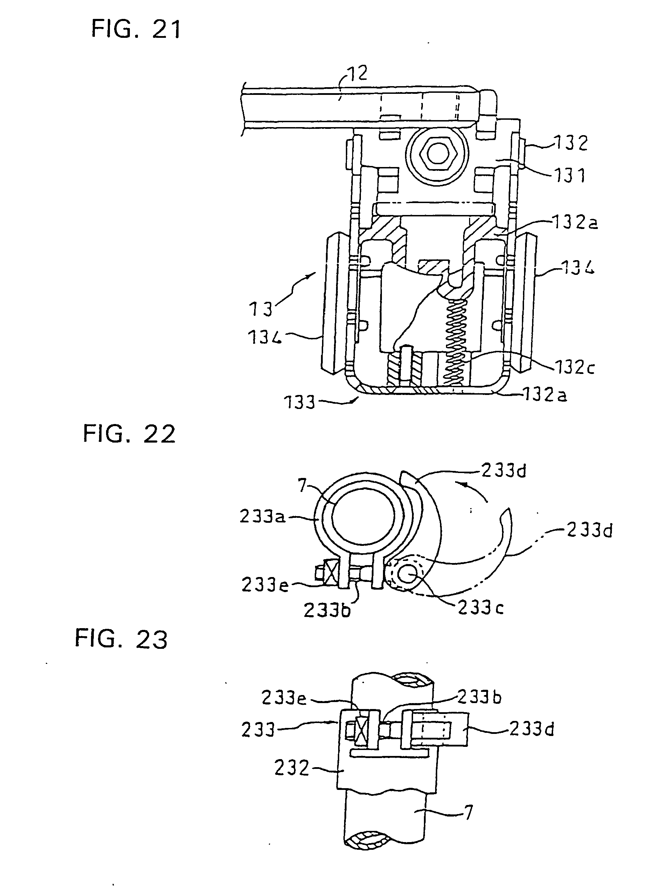

FIG. 21 is a plan view of a pedal. The pedal 13 which is used in a state wherein it extends horizontally in the leftward or rightward direction of the vehicle body can be folded up such that it extends along the crank 12 when it is not used. The pedal 13 has a fixed side 131 attached for pivotal motion to the crank 12, and a movable side 133 coupled to the fixed side 131 by a pivot pin 131. The movable side 133 has a U-shaped frame 132a supported by the pivot pin 132, and a stopper 132b is provided for sliding movement on the frame 132a. The stopper 132b is biased by a compression coil spring 132c and pressed against a side face of the fixed side 131. An operation portion 134 provided such that it extends through the frame 132a from the outer side is coupled to the stopper 132b.

Upon folding up of the pedal 13, the operation portion 134 is displaced to the outer side of the vehicle body against the compression coil spring 132c. Consequently, the contacting force between the fixed side 131 and the stopper 132b is reduced, and therefore, the frame 132a can be pivoted around the fixed side 131 and the pedal 13 can be folded up along the crank 12.

FIG. 22 is a plan view of the clamper 233 for securing the seat post 3 to the rear frame 23, and FIG. 23 is a front elevational view. Referring to both figures, the clamper 233 is formed as part of and at an upper portion of the boss 232 provided on the coupling portion 231 of the rear frame 23. The clamper 233 has a ring 233a whose circumference is partly cut away and a bolt 233b provided at the cutaway portion of the ring 233a, as well as a clamp lever 233d supported for pivotal motion on the head of the bolt 233b by a pin 233c. A nut 233e which fits with the bolt 233b described above is welded to the ring 233a.

The clamp lever 233d forms an eccentric cam with regard to the pin 233c, and the force with which the clamp lever 233d tightens the ring 233a varies in response to the pivotal angle of the clamp lever 233d within a plane perpendicular to the seat post 3. The eccentricity is set such that, at a position indicated by an alternate long and short dashed line, the tightening force is weak, and as the clamp lever 233d is pivoted in the direction indicated by an arrow mark from the position, the tightening force increases. By this, tightening fixation of the seat post 3 and cancellation of the tightening can be performed by pivoting operations of the clamp lever 233d. It is to be noted that the amount by which the bolt 233b is screwed into the nut 233e can be adjusted in advance so that the seat post 3 may be tightened suitably by pivotal motion of the clamp lever 233d.

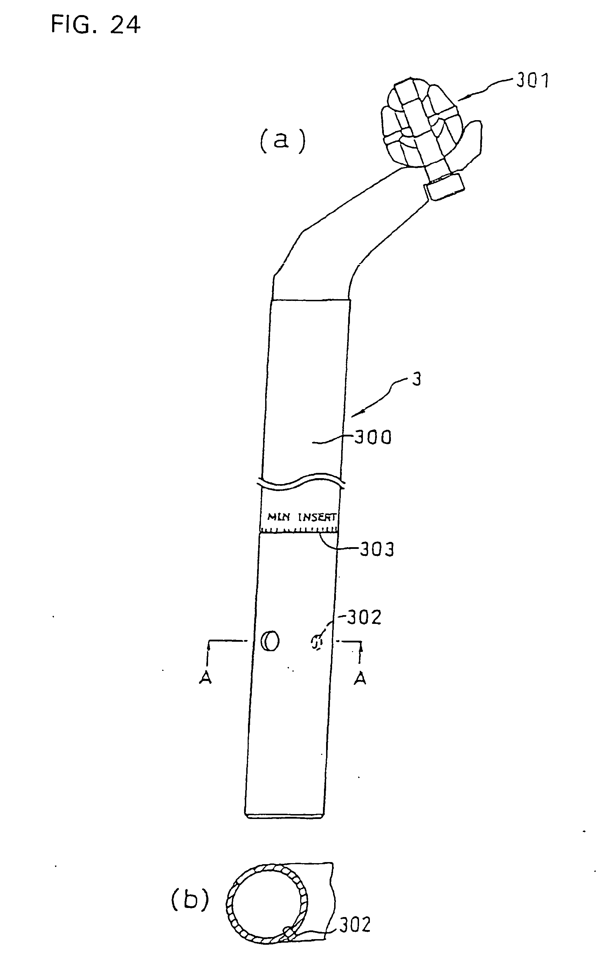

Now, a detailed configuration of the seat tube 3 described above is described with reference to (a), (b) of FIG. 24. It is to be noted that the figure (b) shows a sectional view as viewed in directions indicated by arrow marks A-A of the figure (a). The seat tube 3 is composed of a tube body 300 and a seat fixing portion 301, and a stopper portion, for example, a boss 302, is secured to a suitable lower portion of the tube body 300 while a minimum insertion line 303 is indicated by an emboss or the like at a location of the tube body 300 spaced by a predetermined distance from the boss 302.

The boss 302 is provided to inhibit riding where the seat 4 is higher than a predetermined height in order to secure the strength of the body frame 2, and if the user loosens the clamper 233 and moves up the seat tube 3 in order to raise the seat 4 high, then at a predetermined lift limit, the boss 302 is brought into engagement with a stopper receiving portion not shown formed on an inner periphery of the seat post 232 to prevent the seat tube 3 from being raised any more. At this time, in order to notify the user that the seat tube 3 is at its lowest insertion position, the minimum insertion line 303 is indicated on the circumference of the seat tube 3 on the boundary to the top end of the seat post 232. Accordingly, when the seat tube 3 is moved upwardly, the user can discriminate readily that the seat tube 3 has come to its upward maximum projection position.

A groove which the boss 302 of the seat tube 3 can pass is formed at an upper portion of the inner periphery of the seat post 232 at a position displaced in a diametrical direction from the stopper receiving portion. Therefore, after the boss 302 is engaged with the stopper receiving portion of the seat post 232, if the seat tube 3 is turned by a predetermined angle around its axis and then moved upwardly, then the seat tube 3 can be pulled out and separated fully from the seat post 232. Further, if an operation reverse to that described above is performed, then the two can be coupled to each other readily.

Of the wire 83, the speed change gear wire 831 extends rearwardly in a space surrounded by the rear frame 23 along the right part 23R of the rear frame 23, and the rear brake wire 832 is intermediately displaced to the left part 23L of the rear frame 23 and extends rearwardly along the left part 23L.

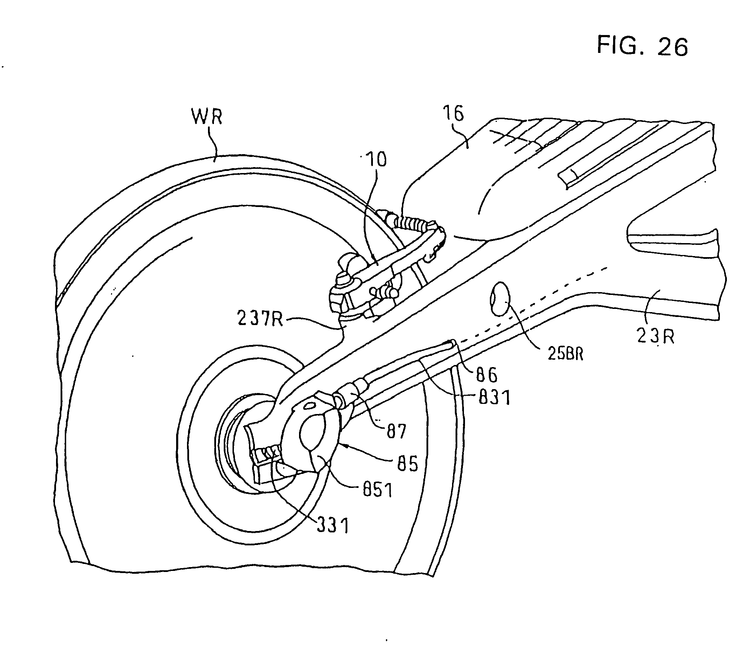

Now, a coupling location between the speed change gear wire 831 and the speed change gear 85 and a coupling location of the rear brake wire 832 and the rear brake 10 are described in detail. FIG. 26 is a right rear perspective view of the motor-assisted bicycle. Referring to the figure, a through-hole 86 is perforated in the right part 23R of the rear frame 23, and the speed change gear wire 831 is extracted to the outside through the through-hole 86. The speed change gear 85 is provided on the axle 331 of the rear wheel WR, and a connector 87 attached to an end portion of the speed change gear wire 831 is securely mounted on a housing 851 of the speed change gear 85. More particularly, the speed change gear wire 831 is covered with a cover tube, and the connector 87 is coupled to the cover tube. The speed change gear wire 831 extends through the connector 87 into the housing 851 and is coupled to a mechanism section (not shown) of the speed change gear 85. The rear brake 10 is supported for pivotal motion on the seats 237L, 237R (only the seat 237R is shown in FIG. 26) formed on the upper face of the rear frame 23.

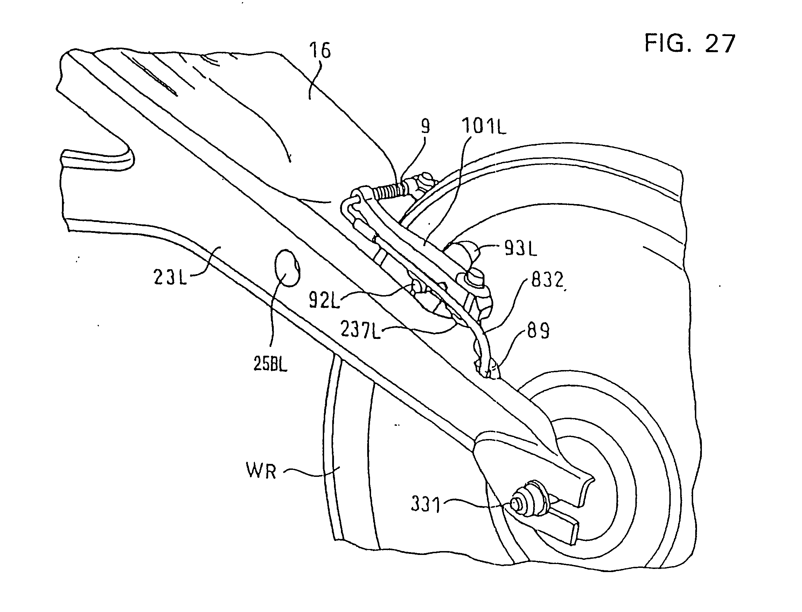

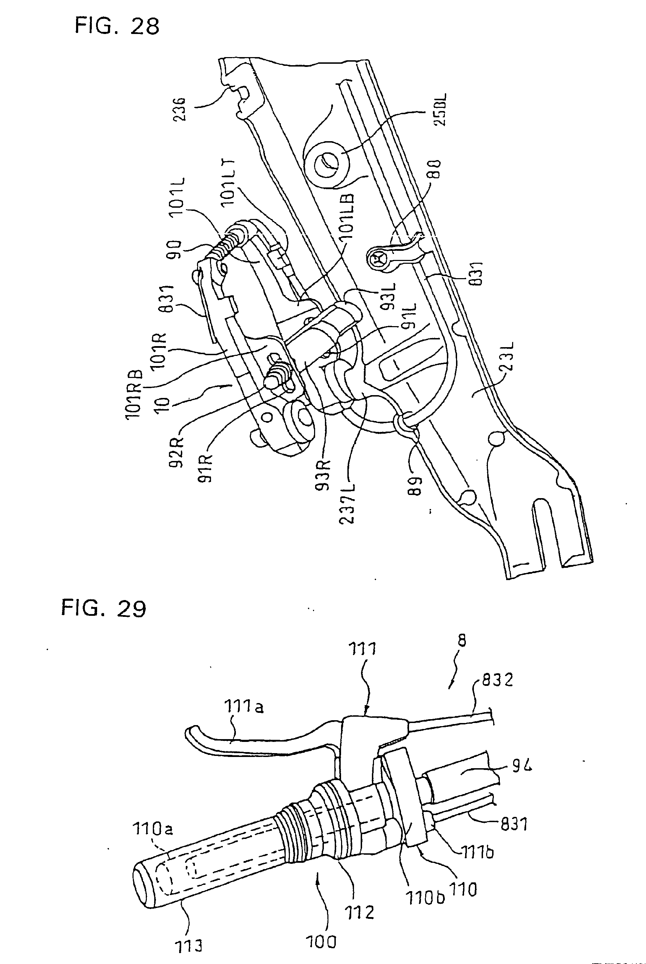

FIG. 27 is a perspective view of the motor-assisted bicycle as viewed from the left rear, and FIG. 28 is a perspective view of the motor-assisted bicycle as viewed from the left lower rear. Referring to both figures, the rear brake wire 832 extends rearwardly along the rear side of the left part 23L of the rear frame 23. The rear brake wire 832 is intermediately held by a fastening plate 88 (FIG. 28) screwed to the rear frame 23. A through-hole 89 is formed on an upper face of the left part 23L of the rear frame 23, and the rear brake wire 832 is extracted upwardly through the through-hole 89.

The rear brake 10 has levers 101L, 101R supported for pivotal motion on the seats 237L, 237R (only the seat 237L is shown in FIGS. 27 and 28) formed on the upper face of the rear frame 23. The rear brake wire 832 extends through a horizontal hole formed at an end (an end portion opposite to the pivot shaft portion) of the left side lever 101L and further through an end of the right side lever 101R and is extracted to the right outer side of the vehicle body. The rear brake wire 832 is secured to the right side lever 101R while it is slidable with respect to the left side lever 101L. More particularly, also the rear brake wire 832 is covered with a cover tube similarly to the speed change gear wire 831, and is securely attached to a downward projection 101LT of the left side lever 101L. At a location between the ends of the levers 101L, 101R, the rear brake wire 832 is covered with a flexible cover 90, and the cover 90 includes a spring member which acts in a direction in which the distance between the ends of the levers 101L, 101R is expanded. Downwardly swollen portions 101LB, 101RB are formed on the levers 101L, 101R, and bolts 92R, 92L extend through elongated holes 91L, 91R of the downwardly swollen portions 101LB, 101RB, respectively. Brake shoes 93L, 93R are mounted at end portions of the bolts 92R, 92L, respectively. The positions of the bolts 92L, 92R can be adjusted within the elongated holes 91L, 91R so that the brake shoes 93L, 93R may be adapted to a rim of the rear wheel WR.

Due to the configuration of the rear brake 10, if the rear brake wire 832 is operated from the handle bar 8 side, then the distance between the ends of the levers 101L, 101R decreases. As a result, the brake shoes 93L, 93R are attracted to the rim side of the rear wheel WR to brake the rear wheel WR.

FIG. 29 is a perspective view of a left handle bar portion of the handle bar 8. Referring to the figure, a handle bar assembly 100 is mounted at a bar portion 94 of the handle bar 8. The handle bar assembly 100 includes a fastening member 110 for removably coupling the handle bar assembly 100 to the bar portion 94, a brake handle member 111 for operating the rear brake 10, a shift operation member 112 for operating the speed change gear 85, and a grip 113.

The fastening member 110 has a sleeve 110a fitted on the bar portion 94, and a lever 110b for tightening the sleeve 110a to fix the sleeve 110a to the bar portion 94. The brake handle member 111, shift operation member 112, and grip 113 are mounted on the sleeve 110a. The rear brake wire 832 is coupled to a lever 111a of the brake handle member 111.

Meanwhile, the speed change gear wire 831 which is introduced through a guide 111b provided on the brake handle member 111 is coupled to the shift operation member 112. The handle bar assembly 100 having the configuration described above can be tightened to or loosened from the bar portion 94 by operating the lever 110b of a clamp portion 110b to allow mounting or dismounting thereof by a single stroke operation.

FIG. 30 is a perspective view illustrating a state wherein the handle bar assembly 100 is removed from the bar portion 94. Upon such removal, the lever 110b is pivoted upwardly to loosen the clamp portion 110c of the fastening member, and the handle bar assembly 100 is turned by a predetermined amount in the direction indicated by an arrow mark R. Consequently, the position of engagement between an engaging pin (not shown) projecting into the sleeve 110a and a groove 94a of the bar portion 94 can be moved in a direction of an arrow mark D. Accordingly, from this state, the handle bar assembly 100 can be pulled out in the direction of the arrow mark D to remove it from the bar portion 94. Since, when the body frame is disassembled into the front and rear portions, the handle bar assembly 100 can be removed from the handle bar 8 readily in this manner, the elements including the disassembled rear frame 23 can be collected integrally.

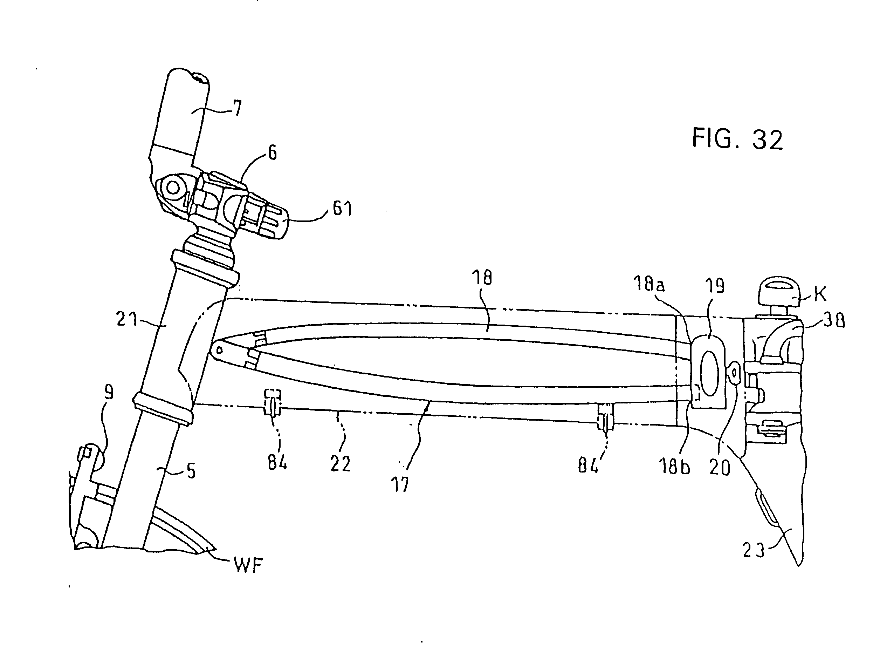

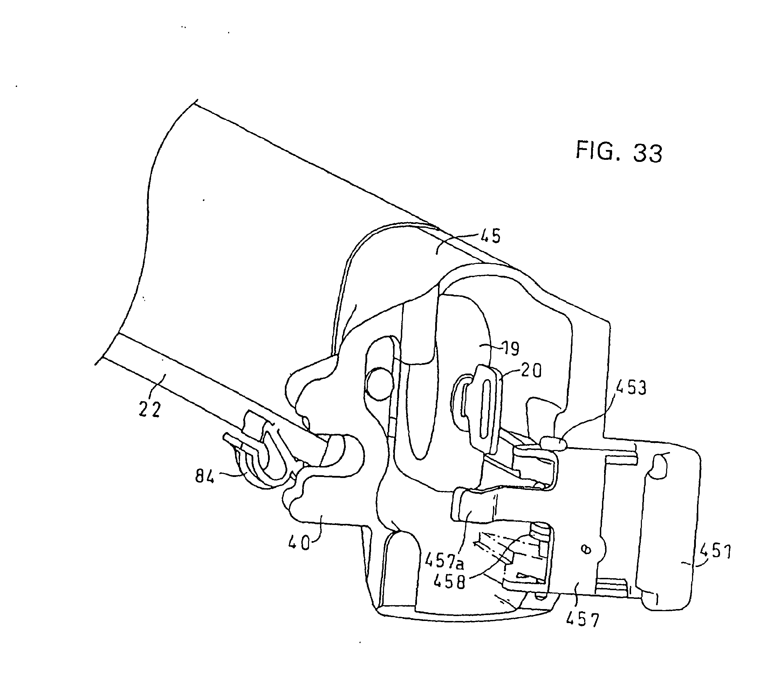

FIG. 32 is a partial side elevational perspective view of the motor-assisted bicycle illustrating an accommodation manner of a wire lock, and FIG. 33 is a partial perspective view of the front frame of the motor-assisted bicycle. In both figures, like reference characters to those of FIGS. 1, 7 and 8 denote like or equivalent elements. A wire lock 17 accommodated in the hollow portion of the front frame 22 is composed of a wire part 18 and a lock part 19, and a key 20 can be adapted for the lock part 19. An end 18a of the wire part 18 is fixedly coupled to the lock part 19, and the other end 18b of the wire part 18 is engageable with a hole formed in the lock part 19. The engaging portion between the wire end 18b and the lock part 19 is put into a locking or unlocking condition by operating the key 20.

As shown in FIGS. 32 and 33, the wire lock 17 can be accommodated in the front frame 22 such that the wire part 18 is bent at a bent portion 18c and the lock part 19 is positioned on the open end side of the front frame 22. Since the follow portion of the front frame 22 is linearly long as shown in the figures, the wire lock 17 can be accommodated without being bent into small fractions or without being wound. Accordingly, removal and accommodation are very easy. Since the wire lock 17 can be accommodated in the vehicle body such that it cannot be observed from the outside in this manner, trouble in carrying or the possibility of loss is eliminated.

### Effects of the Invention

As apparent from the foregoing description, according to the invention as set forth in claims 1, 2, since the assist unit is disposed intensively rearwardly of the seat post, the structure of the frame and associated elements is simplified.

Further, according to the invention as set forth in claim 3, reduction of the weight of the vehicle body can be anticipated, and a boss or the like for suspending the assist unit can be formed readily. Further, according to the invention as set forth in claim 4, the space between the left and right frame parts can be utilized effectively.

Further, according to the invention as set forth in claim 5, since the side faces of the battery can be covered with the great width portion of the rear frame, the battery can be protected sufficiently and a good appearance can be obtained.

Further, according to the invention as set forth in claim 6, since the assembly means of the assist unit to the rear frame and the assembly space for exclusive use need not be assured, reduction of the number of parts and reduction of the size of the rear frame can be anticipated.

Further, according to the invention as set forth in claim 7, since a cover need not be provided for exclusive use for the chain, reduction of the number of parts and assurance of a surplus space are not required. Furthermore, according to the invention as set forth in claim 8, the load applied to the seat post can be received with certainty without increasing the strength of the rear frame to an unnecessarily high level.

As apparent from the foregoing description, according to the invention as set forth in claims 1 to 4, since the locking means can be engaged with the seat post, not only theft prevention of the vehicle body but also prevention of such a mischievous action as to pull off only the seat post can be anticipated. In particular, according to the invention as set forth in claim 2, by linking the front wheel to the seat post, movement of the vehicle can be disabled.

As apparent from the foregoing description, according to the invention as set forth in claims 1 to 4, the range of adjustment of the seat tube in the vertical direction, that is, the seat height adjustment margin, can be increased. Further, according to the invention as set forth in claim 2, the force of the seat tube acting upon the body frame upon riding can be limited to assure the strength of the body frame.

Further, according to the invention as set forth in claim 3, coupling and separation of the seat tube and the seat post to and from each other can be performed readily. Furthermore, according to the invention as set forth in claim 4, the user can discriminate readily that the seat tube has come to its upper maximum projecting position.

As apparent from the foregoing description, according to the invention as set forth in claims 1 to 3, the rear wheel brake wire is laid out so that it does not make an obstacle to loading or unloading of a battery. Particularly, according to the invention as set forth in claim 3, also a good appearance can be anticipated.

Further, according to the invention as set forth in claims 4 to 7, the speed change gear wire is laid out so that it does not make an obstacle to loading or unloading of a battery. Particularly, according to the invention as set forth in claim 5, also a good appearance can be anticipated. Further, according to the invention as set forth in claim 7, the two wires extending rearwardly from one location can be laid out so as not to be complicated.

## Claims

1. A foldable motor-assisted bicycle which includes a manually operated driving system for transmitting treadling force applied to a pedal (13) and a motor driving system for adding assisting power to said manually operated driving system in response to the treadling force, comprising:
a body frame (2) including a front frame (22) and a rear frame (23), wherein said rear frame (23) including a left frame part (23L) and a right frame part (23R),
a seat post (3) supported on said rear frame (23),
wherein said rear frame (23) is connected to said front frame (22) by a hinge (24), and wherein the body frame (2) can be folded up around the hinge (24),
an assist unit (1) including said manually operated driving system and said motor driving system, and
a battery (41),
**characterized in that**
said assist unit (1) is suspended on said rear frame (23) at a portion rearwardly of the lowermost position of the seat post (3), and
the battery (41) is set between said seat post (3) and a rear wheel (WR) for being removable upwardly.

2. A foldable motor-assisted bicycle according to claim 1, **characterized in that** said left frame part (23L) and said right frame part (23R) are coupled to each other at a rather forward location of said vehicle body, and a supporting portion (232) for said seat post (3) is formed at the coupling location of said left frame part (23L) and said right frame part (23R).

3. A foldable motor-assisted bicycle according to claim 1 or 2, **characterized in that** said left frame part (23L) and said right frame part (23R) are formed by die-cast of aluminum.

4. A foldable motor-assisted bicycle according to any one of claims 1 to 3, **characterized in that** a carrying section (234, 235, 236) for the battery (41) is provided rearwardly of said seat post (3) between said left frame part (23L) and said right frame part (23R).

5. A foldable motor-assisted bicycle according to claim 4, **characterized in that** said rear frame (23) is formed with an increased width at a portion thereof immediately rearwardly of said seat post (3) as viewed in a side elevation.

6. A foldable motor-assisted bicycle according to claim 1, **characterized in that**
it comprises rear portion fastening means (25, 25BR, 25BL) for fastening said left frame part (23L) and said right frame part (23R) to each other rearwardly of the position at which said assist unit (1) is suspended but forwardly of the rear wheel (WR), and
said rear portion fastening means (25, 25BR, 25BL) serves also as means for fastening said assist unit (1) to said rear frame (23).

7. A foldable motor-assisted bicycle according to claim 1, **characterized in that**
it comprises a chain (15) extending between a driving sprocket wheel (33) provided on an output power shaft (34) of said assist unit (1) and a driven sprocket wheel (332) on a rear wheel (WR) side, and
said chain (15) overlaps, at a portion thereof in a substantially entire area in a lengthwise direction of the tension side thereof, with said right frame part (23R) as viewed in side elevation.

8. A foldable motor-assisted bicycle according to claim 2, **characterized in that**
it comprises front portion fastening means (26, 27, 27BR, 27BL) provided downwardly of said coupling location for fastening said left frame part (23L) and said right frame part (23R) to each other, and
said front portion fastening means (26, 27, 27BR, 27BL) has a boss portion (26) for cooperating with said supporting portion (232) for said seat post (3) to contact with said seat post (3) to support said seat post (3) at two points.

9. A foldable motor-assisted bicycle according to claim 1, **characterized in that**
a seat post supporting element (232) is formed on said body frame (2), said seat post (3) removably supported on said seat post supporting element (232) with a stroke of upward and downward movement thereof set such that at least a lower portion of said seat post (3) projects downwardly from said body frame (2), and
said seat post (3) has an engaging portion (72) provided at a lower portion thereof for engaging with locking means (71, 73) of said motor-assisted bicycle.

10. A foldable motor-assisted bicycle according to claim 9, wherein
said engaging portion (72) is a through-hole (72) perforated in said seat post (3), and
said locking means (71, 73) includes a wire (71) for being extended, upon locking, to and around a front wheel (WF) through said through-hole (72) and a connection element (73) for coupling the opposite ends of said wire (71) to each other.

11. A foldable motor-assisted bicycle according to claim 10, wherein said body frame (2) can be divided into a front frame (22) for supporting said front wheel (WF), and a rear frame (23) for supporting said seat post.

12. A foldable motor-assisted bicycle according to claim 11, wherein a battery (41) is carried at a lower location rearwardly of said seat post (3), and the battery (41) cannot be removed when said seat post (3) projects downwardly.

13. A foldable motor-assisted bicycle according to claim 1, **characterized in that**
it includes a seat tube (3) which can be moved back and forth in said seat post (232) to adjust the height of said seat tube (3),
said seat post (232) has an open end through which said seat tube can project downwardly, and
said seat tube (3) is not interfered with said power-assisting unit (1) when said seat tube (3) projects downwardly by a maximum amount.

14. A foldable motor-assisted bicycle according to claim 13, **characterized in that** said seat tube (3) has a stopper portion (302) which is engaged with said seat post (232) when said seat tube (3) projects upwardly by a maximum amount.

15. A foldable motor-assisted bicycle according to claim 14, **characterized in that** said stopper portion (302) is a projection provided at a lower portion of said seat tube (3), and said seat post (232) has a grooved portion (310) provided at a position of an inner periphery thereof displaced in a diametrical direction from the position of said projection such that said projection can pass said grooved portion (310).

16. A foldable motor-assisted bicycle according to claim 15, **characterized in that** an indication portion (303) for indicating the upward most projection position is provided on an outer periphery of said seat tube (3), and at a position of said stopper portion at which said stopper portion engages with said seat post (232), said indication portion (303) and the upper end position of said seat post (232) coincide with each other.

17. A foldable motor-assisted bicycle according to claim 1, **characterized in that** it comprises
a rear wheel (WR) disposed rearwardly of said seat post (3),
a battery carrying section set between said seat post (3) and said rear wheel (WR) for removably receiving the battery (41) from above,
a rear wheel brake (10) positioned forwardly of said rear wheel (WR),
and a brake wire (832) for operating said rear wheel brake (10), and that
said brake wire (832) extends rearwardly from an operation section provided on said handle bar (8) along said body frame (2), passes below said battery carrying section and is connected to said rear brake (10).

18. A foldable motor-assisted bicycle according to claim 17,
**characterized in that**
said rear wheel brake (10) is mounted on a rear frame (23), and
said brake wire (832) extends rearwardly of a vehicle body once from said rear wheel brake (10) and then is bent downwardly, whereafter said brake wire (832) extends forwardly passing below said battery carrying section.

19. A foldable motor-assisted bicycle according to claim 17 or 18,
**characterized in that**
a rear frame (23) is formed from a left frame part (23L) and a right frame (23R) part having increased widths in upward and downward directions, that
said battery carrying section is disposed between said left frame part (23L) and said right frame part (23R), and that
said brake wire (832) extends forwardly along the inner side of the increased width frame of either one of said left frame part (23L) and said right frame part (23R).

20. A foldable motor-assisted bicycle according to claim 17 or 18,
**characterized in that** it comprises
a speed change gear (85) provided on a shaft (331) on which said rear wheel (WR) is supported, and
a speed change gear wire (831) for operating said speed change gear (85), and that
said speed change gear wire (831) extends rearwardly from said operation section (110) provided on said handle bar (8) along said body frame (2), passes below said battery (41) and is connected to said rear wheel brake (10).

21. A foldable motor-assisted bicycle according to claim 17 or 18,
**characterized in that** said speed change gear wire (831) extends forwardly along the inner side of the increased width frame of the other of said left frame part (23L) and said right frame part (23R).

22. A foldable motor-assisted bicycle according to claim 21,
**characterized in that** it comprises a fastening member (110) for coupling said brake wire (832) and said speed change gear wire (831) to said increased width frames on the inner side.

23. A foldable motor-assisted bicycle according to claim 17 or 18,
**characterized in that** said operation section (100) provided on said handle bar (8) is an assembly wherein operation mechanisms (111, 112) for said brake (10) and a speed change gear (85) are incorporated integrally.

## Patentansprüche

1. Zusammenklappbares, motorunterstütztes Fahrrad, welches ein manuell betätigtes Antriebssystem umfasst, um eine auf ein Pedal (13) ausgeübte Tretkraft zu übertragen, und ein Motorantriebssystem umfasst, um dem manuell betätigten Antriebssystem in Reaktion auf die Tretkraft eine Unterstützungsenergie hinzuzufügen, umfassend:
einen Rumpfrahmen (2), welcher einen vorderen Rahmen (22) und
einen hinteren Rahmen (23) umfasst, wobei der hintere Rahmen (23) ein linkes Rahmenteil (23L) und ein rechtes Rahmenteil (23R) umfasst,
eine Sattelstütze (3), welche an dem hinteren Rahmen (23) abgestützt ist,
wobei der hintere Rahmen (23) mit dem vorderen Rahmen (22) durch ein Gelenk (24) verbunden ist und wobei der Rumpfrahmen (2) um das Gelenk (24) herum zusammengeklappt werden kann,
eine Unterstützungseinheit (1), welche das manuell betätigte Antriebssystem und das Motorantriebssystem umfasst und
eine Batterie (41),
**dadurch gekennzeichnet, dass**
die Unterstützungseinheit (1) an dem hinteren Rahmen (23) an einem Abschnitt rückwärts von der untersten Position der Sattelstütze (3) aufgehängt ist und
die Batterie (41) zwischen die Sattelstütze (3) und ein Hinterrad (WR) gesetzt ist, um nach oben entnehmbar zu sein.

2. Zusammenklappbares, motorunterstütztes Fahrrad gemäß Anspruch 1, **dadurch gekennzeichnet, dass** das linke Rahmenteil (23L) und das rechte Rahmenteil (23R) miteinander an einer ziemlich vorne liegenden Stelle des Fahrzeugkörpers gekuppelt sind und ein Tragabschnitt (232) für die Sattelstütze (3) an der Kupplungsstelle des linken Rahmenteils (23L) und des rechten Rahmenteils (23R) ausgebildet ist.

3. Zusammenklappbares, motorunterstütztes Fahrrad gemäß Anspruch 1 oder 2, **dadurch gekennzeichnet, dass** das linke Rahmenteil (23L) und das rechte Rahmenteil (23R) durch Aluminiumdruckgießen ausgebildet sind.

4. Zusammenklappbares, motorunterstütztes Fahrrad gemäß einem der Ansprüche 1 bis 3, **dadurch gekennzeichnet, dass** ein Tragabschnitt (234, 235, 236) für die Batterie (41) hinter der Sattelstütze (3) zwischen dem linken Rahmenteil (23L) und dem rechten Rahmenteil (23R) vorgesehen ist.

5. Zusammenklappbares, motorunterstütztes Fahrrad gemäß Anspruch 4, **dadurch gekennzeichnet, dass** der hintere Rahmen (23) an einem Abschnitt desselben unmittelbar hinter der Sattelstütze (3) in einer Seitenansicht gesehen mit einer vergrößerten Breite ausgebildet ist.

6. Zusammenklappbares, motorunterstütztes Fahrrad gemäß Anspruch 1, **dadurch gekennzeichnet, dass**
es ein Hinterabschnittsbefestigungsmittel (25, 25BR, 25BL) umfasst, um das linke Rahmenteil (23L) und das rechte Rahmenteil (23R) miteinander hinter der Position, an welcher die Unterstützungseinheit (1) aufgehängt ist, aber vor dem Hinterrad (WR) zu befestigen, und
das Hinterabschnittsbefestigungsmittel (25, 25BR, 25BL) auch als ein Mittel zur Befestigung der Unterstützungseinheit (1) an dem hinteren Rahmen (23) dient.

7. Zusammenklappbares, motorunterstütztes Fahrrad gemäß Anspruch 1, **dadurch gekennzeichnet, dass**
es eine Kette (15) umfasst, welche sich zwischen einem an einer Ausgangswelle (34) der Unterstützungseinheit (1) vorgesehenen Antriebskettenrad (33) und einem Abtriebskettenrad (332) auf der Seite eines Hinterrads (WR) erstreckt, und
die Kette (15) an einem Abschnitt davon in einem im Wesentlichen vollständigen Bereich in einer Längsrichtung ihrer Zugseite - in einer Seitenansicht gesehen - mit dem rechten Rahmenteil (23R) überlappt.

8. Zusammenklappbares, motorunterstütztes Fahrrad gemäß Anspruch 2, **dadurch gekennzeichnet, dass**
es ein Vorderabschnittsbefestigungsmittel (26, 27, 27BR, 27BL) umfasst, welches unterhalb der Kupplungsstelle vorgesehen ist, um das linke Rahmenteil (23L) und das rechte Rahmenteil (23R) aneinander zu befestigen, und
das Vorderabschnittsbefestigungsmittel (26, 27, 27BR, 27BL) einen Ansatzabschnitt (26) hat zum Zusammenwirken mit dem Tragabschnitt (232) für die Sattelstütze (3), um die Sattelstütze (3) derart zu berühren, dass die Sattelstütze (3) an zwei Punkten abgestützt wird.

9. Zusammenklappbares, motorunterstütztes Fahrrad gemäß Anspruch 1, **dadurch gekennzeichnet, dass**
das Sattelstützentragelement (232) an dem Rumpfrahmen (2) ausgebildet ist, die Sattelstütze (3) an dem Sattelstützentragelement (232) entfernbar getragen ist, wobei ein Hub einer Auf- und Abbewegung derselben derart eingestellt ist, dass wenigstens ein unterer Abschnitt der Sattelstütze (3) von dem Rumpfrahmen (2) nach unten vorsteht, und
die Sattelstütze (3) einen Eingriffsabschnitt (72) hat, welcher an einem unteren Abschnitt derselben vorgesehen ist zum Eingriff mit einem Verriegelungsmittel (71, 73) des motorunterstützten Fahrrads.

10. Zusammenklappbares, motorunterstütztes Fahrrad gemäß Anspruch 9, wobei
der Eingriffsabschnitt (72) ein Durchgangsloch (72) ist, welches die Sattelstütze (3) durchsetzt, und
das Verriegelungsmittel (71, 73) ein Kabel (71) umfasst, um beim Verriegeln zu und um ein Vorderrad (WF) durch das Durchgangsloch (72) verlängert zu werden, und ein Verbindungselement (73) umfasst, um die entgegengesetzten Enden des Kabels (71) miteinander zu kuppeln.

11. Zusammenklappbares, motorunterstütztes Fahrrad gemäß Anspruch 10, wobei der Rumpfrahmen (2) in einen vorderen Rahmen (22) zum Abstützen des Vorderrads (WF) und einen hinteren Rahmen (23) zum Abstützen der Sattelstütze geteilt werden kann.

12. Zusammenklappbares, motorunterstütztes Fahrrad gemäß Anspruch 11, wobei eine Batterie (41) an einer unteren Stelle hinter der Sattelstütze (3) getragen ist und die Batterie (41) nicht entfernt werden kann, wenn die Sattelstütze (3) nach unten vorsteht.

13. Zusammenklappbares, motorunterstütztes Fahrrad gemäß Anspruch 1, **dadurch gekennzeichnet, dass**
es ein Sitzrohr (3) umfasst, welches in der Sattelstütze (232) hin und her bewegt werden kann, um die Höhe des Sitzrohrs (3) einzustellen, die Sattelstütze (232) ein offenes Ende hat, durch welches das Sitzrohr nach unten vorstehen kann, und
sich das Sitzrohr (3) nicht mit der Energieunterstützungseinheit (1) überlagert, wenn das Sitzrohr (3) um einen maximalen Betrag nach unten vorsteht.

14. Zusammenklappbares, motorunterstütztes Fahrrad gemäß Anspruch 13, **dadurch gekennzeichnet, dass** das Sitzrohr (3) einen Anschlagabschnitt (302) hat, welcher mit der Sattelstütze (232) im Eingriff ist, wenn das Sitzrohr (3) um einen maximalen Betrag nach oben vorsteht.

15. Zusammenklappbares, motorunterstütztes Fahrrad gemäß Anspruch 14, **dadurch gekennzeichnet, dass** der Anschlagabschnitt (302) ein Ansatz ist, welcher an einem unteren Abschnitt des Sitzrohrs (3) vorgesehen ist, und die Sattelstütze (232) einen Nutabschnitt (310) hat, welcher an einer Position an einem Innenumfang derselben vorgesehen ist, welcher in einer seitlichen Richtung von der Position des Ansatzes derart versetzt ist, dass der Ansatz den Nutabschnitt (310) passieren kann.

16. Zusammenklappbares, motorunterstütztes Fahrrad gemäß Anspruch 15, **dadurch gekennzeichnet, dass** ein Anzeigeabschnitt (303) zur Anzeige der am weitesten nach oben vorstehenden Position an einem Außenumfang des Sitzrohrs (3) vorgesehen ist, und an einer Position des Anschlagabschnitts, an welcher der Anschlagabschnitt mit der Sattelstütze (232) in Eingriff ist, der Anzeigeabschnitt (303) und die obere Endposition der Sattelstütze (232) miteinander übereinstimmen.

17. Zusammenklappbares, motorunterstütztes Fahrrad gemäß Anspruch 1, **dadurch gekennzeichnet, dass** es umfasst:
ein Hinterrad (WR), welches hinter der Sattelstütze (3) angeordnet ist, einen Batterietragabschnitt, welcher zwischen die Sattelstütze (3) und das Hinterrad (WR) gesetzt ist, um die Batterie (41) entnehmbar von oben aufzunehmen,
eine Hinterradbremse (10), welche vor dem Hinterrad (WR) angeordnet, ist
und ein Bremsseil (832) zur Betätigung der Hinterradbremse (10) und dass
sich das Bremsseil (832) von einem an dem Lenker (8) vorgesehenen Betätigungsabschnitt längs des Rumpfrahmens (2) nach hinten erstreckt, unter dem Batterietragabschnitt hindurchläuft und mit der hinteren Bremse (10) verbunden ist.

18. Zusammenklappbares, motorunterstütztes Fahrrad gemäß Anspruch 17, **dadurch gekennzeichnet, dass**
die Hinterradbremse (10) an einem hinteren Rahmen (23) angebracht ist, und
sich das Bremsseil (832) von einem Fahrzeugkörper einmal von der Hinterradbremse (10) nach hinten erstreckt und dann nach unten gebogen ist, wonach sich das Bremsseil (832) nach vorne erstreckt und unter dem Batterietragabschnitt hindurchführt.

19. Zusammenklappbares, motorunterstütztes Fahrrad gemäß Anspruch 17 oder 18, **dadurch gekennzeichnet, dass**
ein hinterer Rahmen (23) aus einem linken Rahmenteil (23L) und einem rechten Rahmenteil (23R) ausgebildet ist, welche in Richtungen nach oben und nach unten vergrößerte Breiten haben, dass
der Batterietragabschnitt zwischen dem linken Rahmenteil (23L) und dem rechten Rahmenteil (23R) angeordnet ist und dass
sich das Bremsseil (832) längs der Innenseite des Rahmens mit vergrößerter Breite von dem linken Rahmenteil (23L) oder dem rechten Rahmenteil (23R) nach vorne erstreckt.

20. Zusammenklappbares, motorunterstütztes Fahrrad gemäß Anspruch 17 oder 18, **dadurch gekennzeichnet, dass** es umfasst:
ein Gangwechselgetriebe (85), welches an einer Welle (331) vorgesehen ist, an welcher das Hinterrad (WR) abgestützt ist, und
ein Gangwechselgetriebeseil (831) zur Betätigung des Gangwechselgetriebes (85) und dass
sich das Gangwechselgetriebeseil (831) von dem an dem Lenker (8) vorgesehenen Betätigungsabschnitt (110) längs des Rumpfrahmens (2) nach hinten erstreckt, unter der Batterie (41) hindurchführt und mit der Hinterradbremse (10) verbunden ist.

21. Zusammenklappbares, motorunterstütztes Fahrrad gemäß Anspruch 17 oder 18, **dadurch gekennzeichnet, dass** sich das Gangwechselgetriebeseil (831) längs der Innenseite des Rahmens mit vergrößerter Breite von dem anderen von dem linken Rahmenteil (23L) und dem rechten Rahmenteil (23R) nach vorne erstreckt.

22. Zusammenklappbares, motorunterstütztes Fahrrad gemäß Anspruch 21, **dadurch gekennzeichnet, dass** es ein Befestigungselement (110) umfasst, um das Bremsseil (832) und das Gangwechselgetriebeseil (831) mit den Rahmen mit vergrößerter Breite an der Innenseite zu kuppeln.

23. Zusammenklappbares, motorunterstütztes Fahrrad gemäß Anspruch 17 oder 18, **dadurch gekennzeichnet, dass** der an dem Lenker (8) vorgesehene Betätigungsabschnitt (100) ein Aufbau ist, bei dem Betätigungsmechanismen (111, 112) für die Bremse (10) und ein Gangwechselgetriebe (85) integral aufgenommen sind.

## Revendications

1. Bicyclette pliable à assistance motorisée qui comprend un système d'entraînement actionné physiquement destiné à transmettre une force de pédalage appliquée à une pédale (13) et un système d'entraînement à moteur destiné à ajouter une puissance d'assistance audit système d'entraînement actionné physiquement en réponse à la force de pédalage, comprenant :
un corps de cadre (2) comprenant un cadre avant (22) et un cadre arrière (23), dans laquelle ledit cadre arrière (23) comprend une partie de cadre gauche (23L) et une partie de cadre droite (23R) ;
une potence de selle (3) supportée par ledit cadre arrière (23),
dans laquelle ledit cadre arrière (23) est connecté audit cadre avant (22) par une articulation (24) et dans laquelle le corps de cadre (2) peut être replié autour de l'articulation (24) ;
une unité d'assistance (1) comprenant ledit système d'entraînement actionné physiquement et ledit système d'entraînement à moteur ; et
une batterie (41) ;
**caractérisée en ce que** :
ladite unité d'assistance (1) est en suspension sur ledit cadre arrière (23) dans une partie située à l'arrière de la position la plus basse de la potence de selle (3) ; et
la batterie (41) est montée entre ladite potence de selle (3) et une roue arrière (WR) de manière à pouvoir être déposée vers le haut.

2. Bicyclette pliable à assistance motorisée selon la revendication 1, **caractérisée en ce que** ladite partie de cadre gauche (23L) et ladite partie de cadre droite (23R) sont accouplées l'une à l'autre à un emplacement situé plutôt vers l'avant dudit corps de véhicule, et **en ce qu'**une partie de support (232) destinée à ladite potence de selle (3) est formée à l'emplacement de l'accouplement de ladite partie de cadre gauche (23L) avec ladite partie de cadre droite (23R).

3. Bicyclette pliable à assistance motorisée selon la revendication 1 ou la revendication 2, **caractérisée en ce que** ladite partie de cadre gauche (23L) et ladite partie de cadre droite (23R) sont formées par un moulage d'aluminium sous pression.

4. Bicyclette pliable à assistance motorisée selon l'une quelconque des revendications 1 à 3, **caractérisée en ce qu'**une section de support (234, 235, 236) destinée à la batterie (41) est aménagée à l'arrière de ladite potence de selle (3) entre ladite partie de cadre gauche (23L) et ladite partie de cadre droite (23R).

5. Bicyclette pliable à assistance motorisée selon la revendication 4, **caractérisée en ce que** ledit cadre arrière (23) est formé de telle sorte qu'une partie de celui-ci située immédiatement à l'arrière de ladite potence de selle (3) a une largeur accrue lorsqu'elle est vue en élévation latérale.

6. Bicyclette pliable à assistance motorisée selon la revendication 1, **caractérisée en ce que** :
elle comprend des moyens de fixation de partie arrière (25, 25BR, 25BL) destinés à fixer ladite partie de cadre gauche (23L) et ladite partie de cadre droite (23R) l'une à l'autre à l'arrière de la position dans laquelle ladite unité d'assistance (1) est suspendue, mais en avant de la roue arrière (WR) ; et
**en ce que** lesdits moyens de fixation de partie arrière (25, 25BR, 25BL) servent également de moyens de fixation de ladite unité d'assistance (1) sur ledit cadre arrière (23).

7. Bicyclette pliable à assistance motorisée selon la revendication 1, **caractérisée en ce que** :
elle comprend une chaîne (15) qui s'étend entre un pignon d'entraînement (33) disposé sur un arbre de sortie de puissance (34) de ladite unité d'assistance (1) et un pignon mené (332) disposé sur un côté de la roue arrière (WR) ; et
ladite chaîne (15) est en recouvrement, sur une partie de celle-ci dans essentiellement une totalité de la zone dans le sens de la longueur du côté de la tension de celle-ci, ladite partie de cadre droite (23R) étant vue en élévation latérale.

8. Bicyclette pliable à assistance motorisée selon la revendication 2, **caractérisée en ce que** :
elle comprend des moyens de fixation de partie avant (26, 27, 27BR, 27BL) aménagés vers le bas dudit emplacement d'accouplement afin de fixer l'une à l'autre ladite partie de cadre gauche (23L) et ladite partie de cadre droite (23R) ; et
lesdits moyens de fixation de partie avant (26, 27, 27BR, 27BL) comprennent une partie de bossage (26) destinée à coopérer avec ladite partie de support (232) afin de mettre en contact ladite potence de selle (3) avec ladite potence de selle (3) et de supporter ladite potence de selle (3) en deux points.

9. Bicyclette pliable à assistance motorisée selon la revendication 1, **caractérisée en ce que**:
un élément de support de potence de selle (232) est formé sur ledit corps de cadre (2), ladite potence de selle (3) étant supportée de manière amovible sur ledit élément de support de potence de selle (232) avec une course de déplacement vers le haut et vers le bas réglé de telle sorte qu'au moins une partie inférieure de ladite potence de selle (3) est en saillie vers le bas à partir dudit corps de cadre (2) ; et
ladite potence de selle (3) comprend une partie d'engagement (72) aménagée sur une partie inférieure de celle-ci destinée à engager des moyens de blocage (71, 73) de ladite bicyclette à assistance motorisée.

10. Bicyclette pliable à assistance motorisée selon la revendication 9, dans laquelle :
ladite partie d'engagement (72) est un trou traversant (72) percé dans ladite potence de selle (3) ; et
lesdits moyens de blocage (71, 73) comprennent un câble (71) pouvant être étendu, lors d'un blocage, sur et autour d'une roue avant (WF) au travers dudit trou traversant (72) et un élément de connexion (73) destiné à accoupler l'une à l'autre les extrémités opposées dudit câble (71).

11. Bicyclette pliable à assistance motorisée selon la revendication 10, dans laquelle ledit corps de cadre (2) peut être divisé en un cadre avant (22) destiné à supporter ladite roue avant (WF) et un cadre arrière (23) destiné à supporter ladite potence de selle (3).

12. Bicyclette pliable à assistance motorisée selon la revendication 11, dans laquelle une batterie (41) est supportée à un emplacement inférieur situé en arrière de ladite potence de selle (3), et la batterie (41) ne peut pas être déposée lorsque ladite potence de selle (3) est en saillie vers le bas.

13. Bicyclette pliable à assistance motorisée selon la revendication 1, **caractérisée en ce que**:
elle comprend un tube de selle (3) qui peut être déplacé en avant et en arrière dans ladite potence de selle (232) afin de régler la hauteur dudit tube de selle (3) ;
ladite potence de selle (232) comprend une extrémité ouverte au travers de laquelle ledit tube de selle peut saillir vers le bas ; et
ledit tube de selle (3) n'interfère pas avec ladite unité d'assistance de puissance (1) lorsque ledit tube de selle (3) est en saillie vers le bas à une valeur maximale.

14. Bicyclette pliable à assistance motorisée selon la revendication 13, **caractérisée en ce que** ledit tube de selle (3) comprend une partie d'arrêt (302) qui est en engagement avec ladite potence de selle (232) lorsque ledit tube de selle (3) est en saillie vers le haut à une valeur maximale.

15. Bicyclette pliable à assistance motorisée selon la revendication 14, **caractérisée en ce que** ladite partie d'arrêt (302) est une saillie aménagée sur une partie inférieure dudit tube de selle (3), et **en ce que** la potence de selle (232) comprend une partie à gorge (310) aménagée dans une position de périphérie interne de celle-ci décalée dans la direction du diamètre à partir de la position de ladite saillie, de telle sorte que ladite saillie peut passer dans ladite partie à gorge (310).

16. Bicyclette pliable à assistance motorisée selon la revendication 15, **caractérisée en ce qu'**une partie indicatrice (303) destinée à indiquer la position de saillie la plus élevée vers le haut est aménagée sur une périphérie externe dudit tube de selle (3), et **en ce que** dans une position de ladite partie d'arrêt dans laquelle ladite partie d'arrêt s'engage avec ladite potence de selle (232), ladite partie indicatrice (303) et la position d'extrémité supérieure de ladite potence de selle (232) coïncident l'une avec l'autre.

17. Bicyclette pliable à assistance motorisée selon la revendication 1, **caractérisée en ce qu'**elle comprend :
une roue arrière (WR) disposée à l'arrière de ladite potence de selle (3) ;
une section de support de batterie montée entre ladite potence de selle (3) et ladite roue arrière (WR) afin de recevoir de manière amovible la batterie (41) à partir du dessus ;
un frein de roue arrière (10) positionné à l'avant de ladite roue arrière (WR) ; et
un câble de frein (832) destiné à actionner ledit frein de roue arrière (10) ; et **en ce que**
ledit câble de frein (832) s'étend vers l'arrière à partir d'une section de commande située sur ledit guidon (8) le long dudit corps de cadre (2), passe en dessous de ladite section de support de batterie et est connecté audit frein arrière (10).

18. Bicyclette pliable à assistance motorisée selon la revendication 17, **caractérisée en ce que**:
ledit frein de roue arrière (10) est monté sur un cadre arrière (23) ; et
ledit câble de frein (832) s'étend vers l'arrière d'un corps de véhicule en premier lieu à partir dudit frein de roue arrière (10) et est ensuite courbé vers le bas, après quoi ledit câble de frein (832) s'étend vers l'avant en passant en dessous de ladite section de support de batterie.

19. Bicyclette pliable à assistance motorisée selon la revendication 17 ou la revendication 18, **caractérisée en ce que** :
un cadre arrière (23) est formé à partir d'une partie de cadre gauche (23L) et d'une partie de cadre droite (23R) dont les largeurs augmentent dans des directions vers le haut et vers le bas ;
**en ce que** ladite section de support de batterie est disposée entre ladite partie de cadre gauche (23L) et ladite partie de cadre droite (23R); et
**en ce que** ledit câble de frein (832) s'étend vers l'avant le long du côté interne du cadre dont la largeur augmente de l'un ou l'autre de ladite partie de cadre gauche (23L) et de ladite partie de cadre droit (23R).

20. Bicyclette pliable à assistance motorisée selon la revendication 17 ou la revendication 18, **caractérisée en ce qu'**elle comprend :
un pignon de changement de vitesse (85) disposé sur un axe (331) qui supporte ladite roue arrière (WR) ; et
un câble pour pignon de changement de vitesse (831) destiné à actionner ledit pignon de changement de vitesse (85) ; et
**en ce que** ledit câble pour pignon de changement de vitesse (831) s'étend vers l'arrière à partir de ladite section de commande (110) aménagée sur ledit guidon (8) le long dudit corps de cadre (2), passe en dessous de ladite batterie (41) et est connecté audit frein de roue arrière (10).

21. Bicyclette pliable à assistance motorisée selon la revendication 17 ou la revendication 18, **caractérisée en ce que** ledit câble pour pignon de changement de vitesse (831) s'étend vers l'avant le long du côté interne du cadre à largeur accrue de l'autre de ladite partie de cadre gauche (23L) et de ladite partie de cadre droite (23R).

22. Bicyclette pliable à assistance motorisée selon la revendication 21, **caractérisée en ce qu'**elle comprend un élément de fixation (110) destiné à accoupler ledit câble de frein (832) et ledit câble pour pignon de changement de vitesse (831) aux dits cadres à largeur accrue sur le côté interne.

23. Bicyclette pliable à assistance motorisée selon la revendication 17 ou la revendication 18, **caractérisée en ce que** ladite section de commande (100) aménagée sur ledit guidon (8) est un ensemble dans lequel les mécanismes de commande (111, 112) destinés audit frein (10) et à un pignon de changement de vitesse (85) sont incorporés de manière intégrée.
